(19) Europäisches Patentamt / European Patent Office / Office européen des brevets

(11) **EP 3 502 662 B1**

(12) **EUROPEAN PATENT SPECIFICATION**

(45) Date of publication and mention of the grant of the patent:
**01.05.2024 Bulletin 2024/18**

(21) Application number: **18211684.8**

(22) Date of filing: **11.12.2018**

(51) International Patent Classification (IPC):
**G01N 21/65** (2006.01)   **G01N 21/17** (2006.01)
**G01N 25/18** (2006.01)   **G01K 11/125** (2021.01)

(52) Cooperative Patent Classification (CPC):
**G01N 21/65; G01K 11/125; G01N 21/1717;
G01N 25/18;** G01N 2021/1725; G01N 2021/1731;
G01N 2201/067

(54) **DUAL-WAVELENGTH LASER FLASH RAMAN SPECTROSCOPY METHOD AND SYSTEM FOR THERMOPHYSICAL CHARACTERIZATION OF 2D NANOMATERIAL**

VERFAHREN UND SYSTEM MIT ZWEIWELLENLÄNGEN-LASERFLASH-RAMAN-SPEKTROSKOPIE ZUR THERMOPHYSIKALISCHEN CHARAKTERISIERUNG VON 2D-NANOMATERIAL

PROCÉDÉ DE SPECTROSCOPIE RAMAN À FLASH LASER ET DOUBLE LONGUEUR D'ONDE ET SYSTÈME DE CARACTÉRISATION THERMOPHYSIQUE DE NANOMATÉRIAU 2D

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.12.2017 CN 201711384573**

(43) Date of publication of application:
**26.06.2019 Bulletin 2019/26**

(73) Proprietor: **Tsinghua University
Beijing 100084 (CN)**

(72) Inventors:
• **Zhang, Xing
Beijing, Beijing 100084 (CN)**
• **Fan, Aoran
Beijing, Beijing 100084 (CN)**
• **Hu, Yudong
Beijing, Beijing 100084 (CN)**
• **Ma, Weigang
Beijing, Beijing 100084 (CN)**

(74) Representative: **Rössler, Matthias
karo IP Patentanwälte
Kahlhöfer Rößler Kreuels PartG mbB
Postfach 32 01 02
40416 Düsseldorf (DE)**

(56) References cited:
**US-A1- 2013 266 038     US-A1- 2017 219 489**

• **REPARAZ J S ET AL: "A novel contactless technique for thermal field mapping and thermal conductivity determination: Two-Laser Raman Thermometry", REVIEW OF SCIENTIFIC INSTRUMENTS, AIP, MELVILLE, NY, US, vol. 85, no. 3, 10 March 2014 (2014-03-10), XP012183002, ISSN: 0034-6748, DOI: 10.1063/1.4867166 [retrieved on 1901-01-01]**

EP 3 502 662 B1

## Description

### FIELD

The present disclosure relates to the field of thermophysical characterization in micro/nano scale, and more particularly to a dual-wavelength laser flash Raman spectroscopy method and system for thermophysical characterization of a two-dimensional (2D) nanomaterial.

### BACKGROUND

Nano-film materials have important application prospects in fields of photoelectric elements, mechanical elements and storage media. Accurate determination of properties of the nano-film materials is a prerequisite for their applications.

Contact methods, as traditional measurement methods of thermal conduction characteristics, have been widely used in measurements of two-dimensional (2D) nanomaterials. In 2013, Xie et al. (Xie H, et al., Applied Physics Letters, 2013, 102(11): 111911) measured a thermal conductivity of a free-standing graphene nanoribbon by an electrical self-heating method. In the same year, Jang et al. (Jang W, et al., Applied Physics Letters, 2013, 103(13): 133102) measured the thermal conductivity of suspended few-layer graphene by a T-type method. In addition, a suspended microdevice method also has been widely used in the measurement of the 2D nanomaterial. However, the contact methods always introduce electrical and thermal contact resistances, which cannot be eliminated and bring unnecessary errors to the measurement. Microelectrodes needed in the contact method are very difficult to fabricate, increasing the measurement difficulty. Due to electric leakage, these contact methods are generally not applicable to a sample with a substrate. Moreover, properties of a nano-film with a substrate are different from that of a suspended nano-film due to an influence of interfacial effect. Therefore, a non-contact method is needed to determine the thermal conduction characteristic of the 2D nanomaterial with a substrate.

A Raman spectroscopy method, as a non-contact method, can be used to determine the thermal conduction characteristic of the 2D nanomaterial with the substrate by heating a sample of the 2D material with the substrate with a continuous laser; and determining a temperature rise of the 2D nanomaterial by measuring a shift of a Raman characteristic peak of the 2D nanomaterial. However, in such a measurement, it needs to assume a laser absorptivity of the 2D material and a temperature rise of the substrate, which introduces unnecessary errors. In 2016, Li et al. (Li Q Y, et al., International Journal of Heat and Mass Transfer, 2016, 95: 956-963) developed a comprehensive Raman spectroscopy method, in which a pulsed laser and a continuous laser are respectively used to heat the 2D nanomaterial with the substrate, a laser absorptivity ratio of the 2D material to the substrate and a thermal conductivity of the 2D material are obtained by changing laser spot sizes, an influence of the laser absorptivity of the 2D nanomaterial is eliminated by comparing temperature rises measured with the pulsed laser and the continuous laser, and a thermal diffusivity of the 2D material is obtained by changing a pulse duration of the pulsed laser. However, in this method, it needs to adjust a distance between a focal plane and the sample to change the laser spot size, introducing some errors in the measurement. Lower discriminations of the laser absorptivity ratio of the 2D material to the substrate and the thermal conductivity of the 2D material also bring certain measurement errors. In addition, a heating laser is also used as a detecting laser, thermal drift will occur to the laser if the laser power is too high, the temperature rise of the sample will be too small if the laser power is too low, and both cases will affect the measurement precision.

Consequently, the thermal conduction characteristic of the 2D nanomaterial with a substrate cannot be accurately determined. It needs to develop a simpler and more accurate method for determining the thermal conduction characteristic of the 2D nanomaterial with the substrate.

US2017219489 (A1) provides a method of microscopy and a system of microscopy. The method comprises directing a pulse of a pump optical beam to form an optical spot on a substance; measuring changes in a temperature-dependent or photo-excited property of the substance; and analyzing the measured changes to distinguish between information pertaining to the property at a portion of the spot, and information pertaining to the property at other portions of the spot.

US2013266038 (A1) provides an apparatus for measuring thermal diffusivity includes a Raman spectroscope, a heating device, and a signal analyzing unit. The Raman spectroscope is utilized to measure a Raman scattering intensity of different sites of a film to be measured. The heating device is utilized to provide a controllable thermal driving wave. The signal analyzing unit is utilized to analyze the Raman scattering intensity from the Raman spectroscope and the thermal driving wave so as to evaluate the thermal diffusivity of the film to be measured.

### SUMMARY

The scope of the present invention is defined by the appended independent claims. Preferred embodiments are defined by the appended dependent claims.

## BRIEF DESCRIPTION OF THE DRAWINGS

These and other aspects and advantages of embodiments of the present disclosure will become apparent and more readily appreciated from the following descriptions made with reference to the drawings, in which:

Fig. 1 is a flow chart of a dual-wavelength laser flash Raman spectroscopy method for thermophysical characterization of a 2D nanomaterial according to an embodiment of the present disclosure;

Fig. 2 is a flow chart of step S100 of a dual-wavelength laser flash Raman spectroscopy method for thermophysical characterization of a 2D nanomaterial according to an embodiment of the present disclosure;

Fig. 3 is a flow chart of step S200 of a dual-wavelength laser flash Raman spectroscopy method for thermophysical characterization of a 2D nanomaterial according to an embodiment of the present disclosure;

Fig. 4 is a schematic diagram of a dual-wavelength laser flash Raman spectroscopy system for thermophysical characterization of a 2D nanomaterial according to an embodiment of the present disclosure;

Fig. 5 is a schematic diagram of a dual-wavelength laser flash Raman spectroscopy system for thermophysical characterization of a 2D nanomaterial according to another embodiment of the present disclosure;

Fig. 6 is a schematic diagram of a thermophysical parameter determining device in a dual-wavelength laser flash Raman spectroscopy system according to an embodiment of the present disclosure;

Fig. 7 is a schematic diagram of a physical model of a sample including 2D nanomaterial and provided with a substrate according to an embodiment of the present disclosure;

Fig. 8 is a schematic diagram illustrating changes in a heating pulse sequence, a detecting pulse sequence, a sample temperature, and a substrate temperature according to an embodiment of the present disclosure;

Fig. 9 illustrates a dimensionless temperature rise curve of a sample with a sensitivity of a thermal diffusivity being $\pm$ 20% according to an embodiment where the sample is provided with a substrate;

Fig. 10 illustrates a dimensionless temperature rise curve of a substrate with a sensitivity of a thermal diffusivity being $\pm$ 20% according to an embodiment where the substrate is provided below a sample;

Fig. 11 illustrates a dimensionless temperature rise curve of a sample with a sensitivity of a thermal conductivity being $\pm$ 20% according to an embodiment where the sample is provided with a substrate;

Fig. 12 illustrates a dimensionless temperature rise curve of a substrate with a sensitivity of a thermal conductivity being $\pm$ 20% according to an embodiment where the substrate is provided below a sample;

Fig. 13 illustrates a dimensionless temperature rise curve of a sample with a sensitivity of a contact thermal conductivity being $\pm$ 20% according to an embodiment where the sample is provided with a substrate;

Fig. 14 illustrates a dimensionless temperature rise curve of a substrate with a sensitivity of a contact thermal conductivity being $\pm$ 20% according to an embodiment where the substrate is provided below a sample;

Fig. 15 illustrates a dimensionless temperature rise curve of a suspended sample with a sensitivity of a thermal diffusivity being $\pm$ 20% according to an embodiment of the present disclosure.

Reference Numerals:

| A | sample |
| B | substrate |
| 100 | sample chamber |
| 110 | vacuum pump |
| 120 | temperature control platform |
| 200 | heating device |
| a | first output optical path |
| 210 | first laser |
| 220 | first electro-optical modulator |
| 300 | detecting device |
| b | second output optical path |
| 310 | second laser |
| 320 | second electro-optical modulator |
| 400 | thermophysical parameter determining device |
| 410 | modeling unit |
| 420 | data processing unit |

430      thermophysical parameter determining unit
500      double-channel digital signal generator
600      Raman spectrometer
700      temperature rise determining unit
810      plane mirror
820      half mirror

## DETAILED DESCRIPTION

Embodiments of the present disclosure will be described in detail below. Those skilled in the art will understand that these embodiments are explanatory, illustrative, and used to generally understand the present disclosure, and shall not be construed to limit the present disclosure.

The scope of the present invention is solely limited as defined by the appended claims.

Embodiments not indicating specific techniques or conditions are carried out in accordance with common techniques or conditions in the related art or in accordance with the product specifications, unless specified otherwise.

In order to accurately measure a thermophysical parameter of a 2D nanomaterial, embodiments of the present disclosure provide a dual-wavelength laser flash Raman spectroscopy method for thermophysical characterization of a 2D nanomaterial. In this method, for a sample including the 2D nanomaterial and provided with a substrate, a stronger heating pulsed laser is used to heat the sample and the substrate; a detecting pulsed laser having a wavelength different from that of the heating pulsed laser is used to detect Raman signals during a time interval $t_c$ of the heating pulsed laser; and based on a linear relationship between a Raman spectral peak shift and a temperature rise, a temperature rise of the sample and a temperature rise at a surface of the substrate during a pulse duration $t_p$ of the detecting pulsed laser are determined. Moreover, a time deviation $t_d$ between the detecting pulsed laser and the heating pulsed laser may be regulated by a double-channel digital signal generator, and a temperature rise curve of the sample and a temperature rise curve at the surface of the substrate over time are determined at the same time, thereby acquiring thermophysical parameters, like a thermal diffusivity $\alpha$ and a thermal conductivity $\lambda$ of the sample of the 2D nanomaterial, and a thermal contact resistance $g$ between the 2D nanomaterial and the substrate. The time deviation $t_d$ is determined by the digital signal generator, thus the temporal precision of the measurement can reach 100 ps in practice. In addition, a temperature rise of a suspended 2D nanomaterial over time can also be determined by the above method, so as to acquire a thermal diffusivity $\alpha$ of the suspended 2D nanomaterial. The wavelength of the probe laser (i.e., detecting laser) should be different from the heating laser to distinguish the Raman scattering inspired by the heating laser and the probe laser, and the Raman scattering inspired by the heating laser can be eliminated through changing grating position of Raman spectrometer in the measurement.

Therefore, embodiments of the present disclosure provide a measurement method of thermophysical parameters of a 2D nanomaterial, which achieves non-contact measurement using double lasers, is suitable for both the suspended 2D nanomaterial and the 2D nanomaterial provided with a substrate, and has a higher precision and a higher sensitivity.

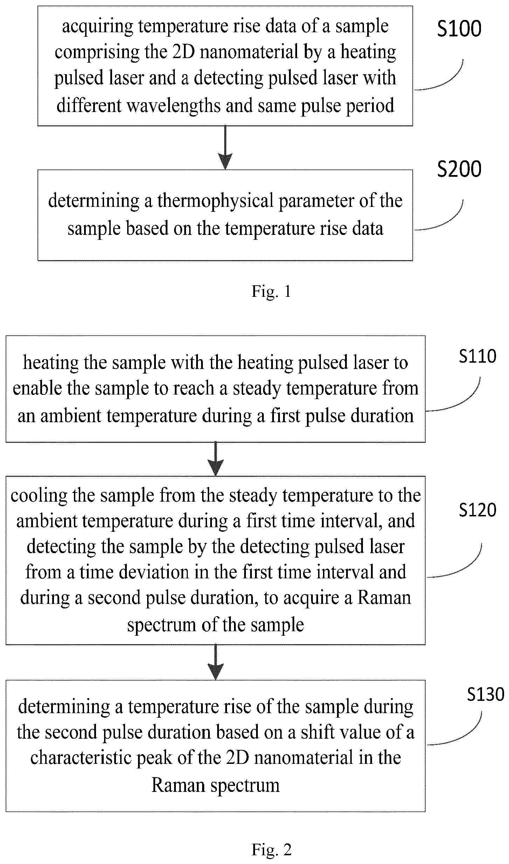

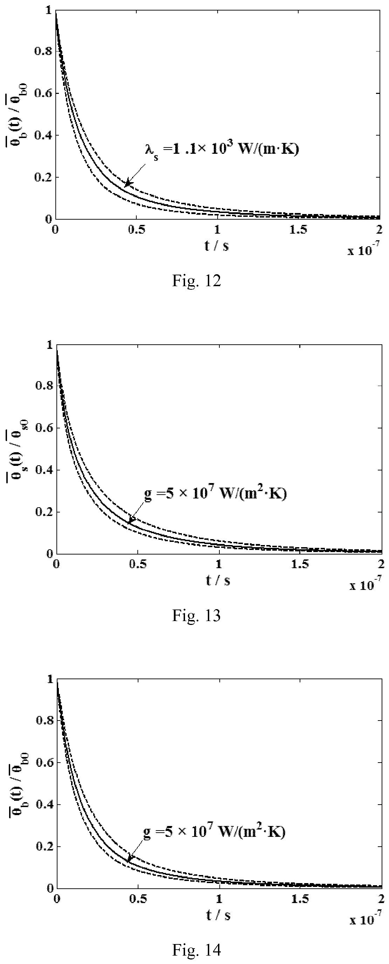

According to first embodiments of the present disclosure, a dual-wavelength laser flash Raman spectroscopy method for thermophysical characterization of a 2D nanomaterial is provided, which will be described in detail with reference to Figs. 1-4 and 7-15. In embodiments of the present disclosure, as illustrated in Fig. 1, the dual-wavelength laser flash Raman spectroscopy method for thermophysical characterization of a 2D nanomaterial includes the following operations.

At S100, temperature rise data of a sample including the 2D nanomaterial is acquired by a heating pulsed laser and a detecting pulsed laser with different wavelengths and same pulse period.

At this step, two pulsed lasers with different wavelengths and same pulse period are used. The heating pulsed laser is used first to heat the sample, and then the detecting pulsed laser is used to detect the sample. Therefore, the sample is heated by the heating pulsed laser and detected by the detecting pulsed laser at different stages, respectively, thereby avoiding the influence of a high laser power on the monochromaticity of the laser and the further influence on the measurement precision. And the time deviation $t_d$ between the detecting pulsed laser and the heating pulsed laser is regulated by a double-channel digital signal generator, thus the temporal precision of the measurement can reach 100 ps in practice. Moreover, measurement errors are avoided as no lens zooming is needed; and measuring data in a cooling stage eliminates an influence of laser absorptivity on the measurement. As a result, a thermophysical parameter of the sample determined with this method has a better accuracy and a higher sensitivity.

The inventors of the present disclosure have discovered through researches that, a thermal contact resistance and an electrical contact resistance introduced by a contact method cannot be eliminated, bringing deviations to the measurement. Moreover, microelectrodes needed in the contact method are difficult to fabricate, thereby increasing the testing difficulty. Furthermore, due to electric leakage, the contact method is not applicable to a sample with a substrate. However, the comprehensive Raman spectroscopy method, as a non-contact method, is easy to introduce measurement errors because the adjustment of its spot size is realized by lens zooming. Lower discriminations of a laser absorptivity ratio and a thermal conductivity of the 2D material also bring certain measurement errors. In addition, a heating laser is also used as a detecting laser, which also affects the measurement precision.

Inventors of the present disclosure has found through long-term researches that, for a sample including a 2D nanomaterial, a stronger heating pulsed laser may be used first to heat the sample, and then a detecting pulsed laser having a wavelength different from that of the heating pulsed laser may be used during a time interval of the heating pulsed laser to detect the sample so as to acquire temperature rise data of the sample, based on the temperature rise data, a thermophysical parameter of the sample is determined. With this method, measurement errors are avoided as no lens zooming is needed; the sample is heated by the heating pulsed laser and detected by the detecting pulsed laser, respectively, which avoids the influence of a high laser power on the monochromaticity of the laser and the further influence on the measurement precision; the time deviation $t_d$ between the detecting pulsed laser and the heating pulsed laser is regulated by a double-channel digital signal generator, thus the temporal precision of the measurement can reach 100 ps. As a result, the thermophysical parameter of the sample of the 2D nanomaterial characterized by this method has a higher precision, a better accuracy and a higher sensitivity.

In embodiments of the present disclosure, step 100 may be carried out in a vacuum environment with a vacuum degree less than $10^{-3}$ Pa. Using a two-level vacuum system including a vacuum pump and a molecular vacuum pump can effectively eliminate an effect of natural convection in a sample chamber on the testing precision.

In embodiments of the present disclosure, as illustrated in Fig. 2, step S100 may specifically include the following operations.

At S110, the sample is heated by the heating pulsed laser to a steady temperature from an ambient temperature during a first pulse duration.

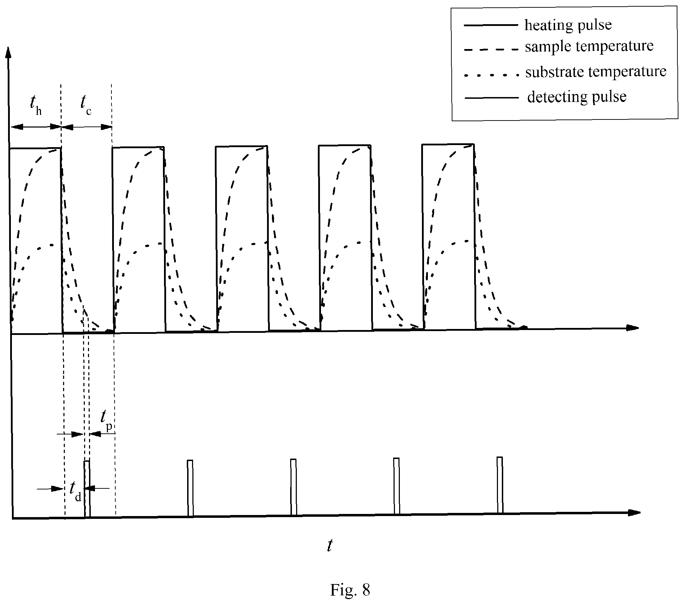

At this step, as illustrated in Fig. 8, the sample is heated to the steady temperature $T_2$ from the ambient temperature $T_1$ during the first pulse duration $t_h$.

In embodiments of the present disclosure, a control precision of the ambient temperature $T_1$ is $\pm$ 0.1 K. Using a temperature control platform with such a high precision enables the thermophysical parameter of the sample of the 2D nanomaterial acquired thereby to have a higher precision and a better accuracy.

In embodiments of the present disclosure, the heating pulsed laser may be formed by modulating a continuous laser with an electro-optical modulator and a digital signal generator. By converting a continuous laser into a pulsed laser with the electro-optical modulator, the heating pulsed laser and the detecting pulsed laser with different wavelengths and same pulse period can be obtained.

In some embodiments, for a sample provided with a substrate below a lower surface thereof, as illustrated in Fig. 8, the sample and the substrate are simultaneously heated by the heating pulsed laser. As a result, the substrate also rises to a steady temperature $T_2$' from the ambient temperature $T_1$ during the first pulse duration $t_h$. In other embodiments, for a suspended sample, only the sample is heated by the heating pulsed laser. As a result, only the sample rises to the steady temperature $T_2$ from the ambient temperature $T_1$ during the first pulse duration $t_h$.

At S120, the sample is cooled from the steady temperature to the ambient temperature during a first time interval, and is detected by the detecting pulsed laser from a time deviation in the first time interval and during a second pulse duration, to acquire a Raman spectrum of the sample.

At this step, as illustrated in Fig. 8, the sample is cooled from the steady temperature $T_2$ to the ambient temperature $T_1$ during the first time interval $t_c$, and the sample is detected by the detecting pulsed laser from the time deviation $t_d$ in the first time interval $t_c$ and during the second pulse duration $t_p$, to acquire the Raman spectrum of the sample.

In embodiments of the present disclosure, the detecting pulsed laser may be formed by modulating a continuous laser with an electro-optical modulator and a digital signal generator. Moreover, the wavelength of the detecting pulsed laser is greater than that of the heating pulsed laser, so that the Raman spectrum determined based on the wavelength of the detecting pulsed laser will not be disturbed by heating pulse signals. Furthermore, an intensity of the detecting pulsed laser irradiating onto an upper surface of the sample is less than 3 mW, which will not cause temperature rise of the sample of the 2D nanomaterial.

In embodiments of the present disclosure, the 2D nanomaterial may be a 2D non-metallic material, and the sample of the 2D nanomaterial may be a nano-film, so that a Raman characteristic peak obtained from the nano-film sample of the 2D non-metallic material will has a better intensity, thereby facilitating to calculate the temperature rise data of the sample more accurately. In some embodiments of the present disclosure, the 2D nanomaterial may be graphene, silylene or phosphorene. Therefore, these 2D nano-film materials having significant Raman characteristic peaks can be used in this method, and the thermophysical parameter tested by this method has a higher accuracy.

In embodiments of the present disclosure, the sample may be provided with a substrate below a lower surface thereof. In embodiments of the present disclosure, the substrate includes silicon dioxide, so that the substrate also has a Raman characteristic peak. Consequently, a temperature rise of the substrate can be determined, and the thermophysical parameter of the 2D nanomaterial can be calculated more accurately.

In some specific embodiments of the present disclosure, for the sample provided with the substrate below the lower surface thereof, step S120 further includes: detecting the sample by the detecting pulsed laser during the second pulse duration $t_p$ to acquire a Raman spectrum of the sample and the substrate at the same time.

In some embodiments of the present disclosure, prior to step S100, step S140 may be performed: scanning the sample of the 2D nanomaterial with a continuous detecting laser at different temperatures to obtain Raman spectrums. Based on shift values of the characteristic peak of the 2D nanomaterial in the Raman spectrums over the temperature, a relation curve between a peak shift of the Raman characteristic peak of the sample and the temperature rise can be calibrated. Therefore, the temperature rise of the sample can be deduced directly at step S220 in virtue of a corresponding shift value of the characteristic peak in the Raman spectrum, which is convenient and efficient. In some embodiments, for the sample provided with the substrate below the lower surface thereof, Raman spectrums of the sample and the substrate may be determined at different temperatures. Based on shift values of the characteristic peak of the 2D nanomaterial in the Raman spectrums over the temperature, the relation curve between the peak shift of the Raman characteristic peak of the sample and the temperature rise can be calibrated; and based on shift values of a characteristic peak of the substrate in the Raman spectrums over the temperature, a relation curve between a peak shift of the Raman characteristic peak of the substrate and the temperature rise can be calibrated.

In embodiments of the present disclosure, testing parameters for Raman signal detection are not specifically limited, such as a spot radius $r_p$ of the detecting pulsed laser, which may be selected by those skilled in the art according to specific materials of the sample and the substrate, and will not be elaborated herein. It should be noted that, the term "spot radius" refers to a laser spot radius where a laser power density attenuates to 1/e of the laser power density at a laser center, i.e., laser spot size.

At S130, a temperature rise of the sample during the second pulse duration is determined based on a shift value of a characteristic peak of the 2D nanomaterial in the Raman spectrum.

At this step, the temperature rise $T_3$ of the sample during the second pulse duration $t_p$ is determined based on the shift value of the characteristic peak of the 2D nanomaterial in the Raman spectrum. In some specific embodiments of the present disclosure, for the sample provided with the substrate below the lower surface thereof, step S130 may further includes: determining the temperature rise $T_3$ of the sample and a temperature rise $T_4$ of the substrate during the second pulse duration $t_p$ based on the shift value of the characteristic peak of the 2D nanomaterial and a shift value of a characteristic peak of the substrate in the Raman spectrum, respectively. It should be noted that, as the second pulse duration $t_p$ is very short, the temperature rise during the second pulse duration $t_p$ may be approximated as a temperature at $t$ time point.

At S200, a thermophysical parameter of the sample is determined based on the temperature rise data.

At this step, the thermophysical parameter of the sample is determined based on the temperature rise data of the sample acquired at step S100. In embodiments of the present disclosure, the thermophysical parameter may include at least one of thermal conductivity $\lambda$, thermal diffusivity $\alpha$ and contact thermal conductivity $g$. In some specific embodiments of the present disclosure, for the sample provided with the substrate below the lower surface thereof, the thermophysical parameter acquired at step S200 includes a thermal diffusivity $\alpha_s$ and a thermal conductivity $\lambda_s$ of the sample and a contact thermal conductivity $g$ between the sample and the substrate. In some embodiments of the present disclosure, for the suspended sample, the thermophysical parameter acquired at step S200 includes the thermal diffusivity $\alpha_s$ of the sample.

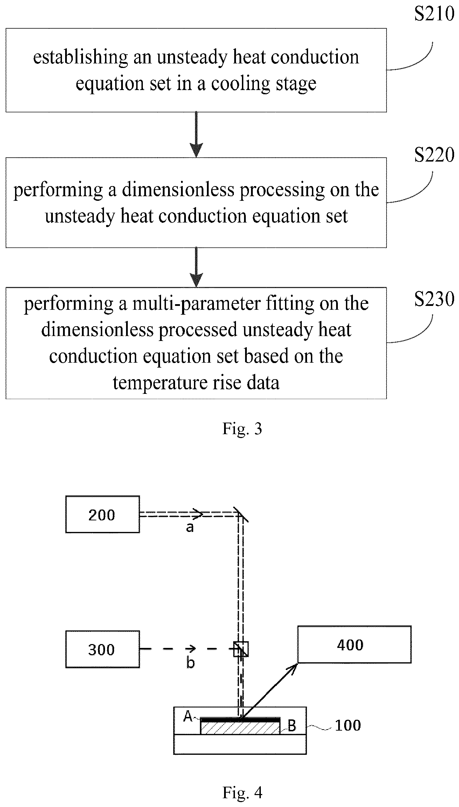

In embodiments of the present disclosure, as illustrated in Fig. 3, step S200 may specifically include the following operations.

At S210, an unsteady heat conduction equation set in a cooling stage is established.

At this step, the unsteady heat conduction equation set in the cooling stage is established according to a specific type of the sample.

In some specific embodiments, for the sample provided with the substrate, the unsteady heat conduction equation set of the sample coupled with the substrate in the cooling stage is established as follows:

$$\left\{\begin{array}{l} \dfrac{\partial^2 \theta_s(r,t)}{\partial r^2} + \dfrac{1}{r}\dfrac{\partial \theta_s(r,t)}{\partial r} - \dfrac{g\big(\theta_s(r,t)-\theta_s(r,0,t)\big)}{\lambda_s \delta} = \dfrac{1}{\alpha_s}\dfrac{\partial \theta_s(r,t)}{\partial t} \\[2mm] \dfrac{\partial^2 \theta_b(r,z,t)}{\partial r^2} + \dfrac{1}{r}\dfrac{\partial \theta_b(r,z,t)}{\partial r} + \dfrac{\partial^2 \theta_b(r,z,t)}{\partial z^2} = \dfrac{1}{\alpha_b}\dfrac{\partial \theta_b(r,z,t)}{\partial t} \\[2mm] \dfrac{\partial \theta_s(0)}{\partial r} = \dfrac{\partial \theta_b(0,z)}{\partial r} = 0 \\[2mm] \theta_s(\infty,t) = \theta_b(\infty,z,t) = 0 \\[2mm] \theta_b(r,\infty,t) = 0 \\[2mm] -\lambda_b \dfrac{\partial \theta_b(r,0,t)}{\partial z} = g\big(\theta_s(r,t)-\theta_b(r,0,t)\big) \\[2mm] \theta_s(r,0) = \theta_{s0}(r) \\[2mm] \theta_b(r,z,0) = \theta_{b0}(r,z) \end{array}\right.$$

where a Gaussian average temperature rise of the sample versus the time $t$ is

$$\overline{\theta}_s(t) = 2\pi \int_0^\infty \theta_s(r,t) q_p \exp\left(-r^2/r_p^2\right) r\,dr \quad,$$

a Gaussian average temperature rise at a surface of the substrate versus the time $t$ is

$$\overline{\theta}_b(t) = 2\pi \int_0^\infty \theta_b(r,0,t) q_p \exp\left(-r^2/r_p^2\right) r\,dr \quad,$$

a steady-state temperature rise of the sample is $\quad \overline{\theta}_{s0} = 2\pi \int_0^\infty \theta_{s0}(r) q_p \exp\left(-r^2/r_p^2\right) r\,dr \quad,$

a steady-state temperature rise of the substrate is $\quad \overline{\theta}_{b0} = 2\pi \int_0^\infty \theta_{b0}(r,0) q_p \exp\left(-r^2/r_p^2\right) r\,dr \quad,$

a Gaussian average constant of a detecting laser is $\quad q_p = 1/\pi r_p^2 \quad$, $\alpha_s$ is a thermal diffusivity of the sample, $\alpha_b$ is a thermal diffusivity of the substrate, and $g$ is a contact thermal conductivity between the sample and the substrate.

In some embodiments, for the suspended sample, the unsteady heat conduction equation set of the sample in the cooling stage is as follows:

$$\left\{\begin{array}{l} \dfrac{\partial^2 \theta_s(r,t)}{\partial r^2} + \dfrac{1}{r}\dfrac{\partial \theta_s(r,t)}{\partial r} = \dfrac{1}{\alpha_s}\dfrac{\partial \theta_s(r,t)}{\partial t} \\[2mm] \dfrac{\partial \theta_s(0)}{\partial r} = 0 \\[2mm] \theta_s(\infty,t) = 0 \\[2mm] \theta_s(r,0) = \theta_{s0}(r) \end{array}\right.$$

where a Gaussian average temperature rise of the sample versus the time $t$ is

$$\overline{\theta}_s(t) = 2\pi \int_0^\infty \theta_s(r,t) q_p \exp\left(-r^2/r_p^2\right) r\,dr \quad,$$

a steady-state temperature rise of the sample is $\quad \overline{\theta}_{s0} = 2\pi \int_0^\infty \theta_{s0}(r) q_p \exp\left(-r^2/r_p^2\right) r\,dr \quad,$

a Gaussian average constant of a detecting laser is $\quad q_p = 1/\pi r_p^2 \quad$, and $\alpha_s$ is a thermal diffusivity of the sample. It should be noted that, term "suspended sample" refers to that a lower surface of a region of the sample on which the detecting pulsed laser irradiates is not in direct contact with the substrate. For example, a hole is defined in the substrate.

At S220, a dimensionless processing is performed on the unsteady heat conduction equation set.

At this step, the dimensionless processing is performed on the unsteady heat conduction equation set established at step S210.

It should be noted that, the dimensionless processing refers to dividing a temperature rise curve of the sample over time in the cooling stage by the steady-state temperature rise $\overline{\theta_{s0}}$ of the sample, and dividing a temperature rise curve of the substrate over time in the cooling stage by the steady-state temperature rise $\overline{\theta_{b0}}$ of the substrate, thereby eliminating effects of the laser absorptivity of the sample and the laser absorptivity of the substrate on measurement results.

In some embodiments of the present disclosure, for the sample provided with the substrate, a dimensionless processed Gaussian average temperature rise curve $\overline{\theta_s}(t)/\overline{\theta_{s0}}$ of the sample over time and a dimensionless processed Gaussian average temperature rise curve $\overline{\theta_b}(t)/\overline{\theta_{b0}}$ at the surface of the substrate over time are only related to dimensionless quantities $Fo_s = \alpha_s t_h/(\lambda_s \delta/g)$, $Fo_b = \alpha_b t_h/(\lambda_s \delta/g)$ and $\kappa = \lambda_b / \sqrt{\lambda_s g \delta}$, where $\lambda_s$ is a thermal conductivity of the sample, $\lambda_b$ is a thermal conductivity of the substrate, and $\delta$ is a thickness of the sample.

In some embodiments of the present disclosure, for the suspended sample, the dimensionless processed Gaussian average temperature rise curve $\overline{\theta_s}(t)/\overline{\theta_{s0}}$ of the sample over time is only related to the thermal diffusivity $\alpha_s$ of the sample.

At S230, a multi-parameter fitting is performed on the dimensionless processed unsteady heat conduction equation set based on the temperature rise data.

At this step, the multi-parameter fitting is performed on the dimensionless processed unsteady heat conduction equation set based on the temperature rise data, to obtain the thermophysical parameter of the sample.

In some embodiments of the present disclosure, the multi-parameter fitting process is not specifically limited, which can be selected by those skilled in the art according to the specific dimensionless processed unsteady heat conduction equation set and temperature rise data, and will not be elaborated herein.

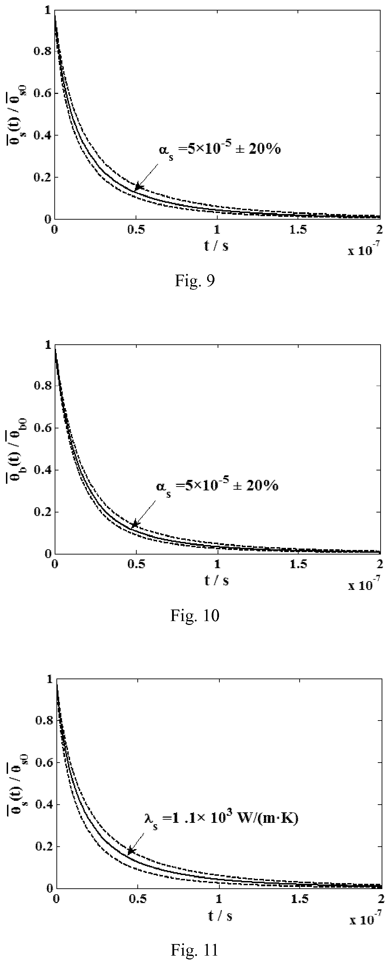

In some embodiments of the present disclosure, for the sample provided with the substrate, the temperature rise data includes the steady-state temperature rise $\overline{\theta_{s0}}$ of the sample, the steady-state temperature rise $\overline{\theta_{b0}}$ of the substrate, a Gaussian average temperature rise curve $\overline{\theta_s}(t)$ of the sample over time in the cooling stage, and a Gaussian average temperature rise curve $\overline{\theta_b}(t)$ at the surface of the substrate over time in the cooling stage, where the temperature rise curve $\overline{\theta_s}(t)$ of the sample and the temperature rise curve $\overline{\theta_b}(t)$ at the surface of the substrate over time in the cooling stage can be obtained by adjusting the time deviation $t_d$. Furthermore, a dimensionless temperature rise curve of the sample and a dimensionless temperature rise curve of the substrate are obtained by the multi-parameter fitting, referring to Figs. 9-14, i.e., obtaining the thermal diffusivity $\alpha_s = \alpha_b Fo_s/Fo_b$ and the thermal conductivity $\lambda_s = \lambda_b \sqrt{\alpha_b t_h / Fo_b} / \delta \kappa$ of the sample, and the thermal contact resistance $g = \lambda_b \sqrt{Fo_b / \alpha_b t_h} / \kappa$ between the sample and the substrate.

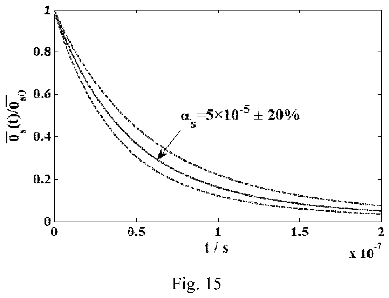

In some embodiments of the present disclosure, for the suspended sample, the temperature rise data includes the steady-state temperature rise $\overline{\theta_{s0}}$ of the sample and the temperature rise curve $\overline{\theta_s}(t)$ of the sample over time in the cooling stage, where the temperature rise curve $\overline{\theta_s}(t)$ of the sample over time in the cooling stage can be obtained by adjusting the time deviation $t_d$. Furthermore, a dimensionless temperature rise curve of the sample can be obtained by the multi-parameter fitting, referring to Fig. 15, i.e., obtaining the thermal diffusivity $\alpha_s$ of the sample.

With the dual-wavelength laser flash Raman spectroscopy method for thermophysical characterization of a 2D nanomaterial according to embodiments of the present disclosure, the sample is heated by the heating pulsed laser and is detected by the detecting pulsed laser at different stages, respectively, which avoids an influence of a high laser power on the measurement precision; and measurement errors are avoided as no lens zooming is needed. As a result, the thermophysical parameter of the sample determined by this method has a better accuracy and a higher sensitivity.

The inventors have unexpectedly found that, for the sample of the 2D nanomaterial, with the method according to embodiments of the present disclosure, a stronger heating pulsed laser may be used to heat the sample, and then a detecting pulsed laser having a wavelength different from that of the heating pulsed laser may be used to detect the sample during a time interval of the heating pulsed laser to acquire temperature rise data of the sample in a cooling stage, based on the temperature rise data, the thermophysical parameter of the sample is determined. With this method, measurement errors are avoided as no lens zooming is needed; the sample is heated by the heating pulsed laser and detected by the detecting pulsed laser, respectively, which avoids the influence of a high laser power on the monochromaticity of the laser and the further influence on the measurement precision; the time deviation $t_d$ between the detecting pulsed laser and the heating pulsed laser is regulated by a double-channel digital signal generator, thus the temporal precision of the measurement can reach 100 ps; and measuring the temperature rise data in the cooling stage eliminates an influence of a laser absorptivity on the measurement. As a result, the thermophysical parameter of the sample of the 2D nanomaterial measured by this method has a higher precision, a better accuracy and a higher sensitivity

As compared with the related art, the thermal diffusivity of the 2D nanomaterial determined by the method of the present disclosure is not affected by the laser absorptivity of the 2D nanomaterial per se and the laser absorptivity of the substrate; and a non-confocal measurement which is caused by changing a distance between a focus of an objective lens and a sample in a comprehensive Raman spectroscopy method is avoided. Moreover, by adjusting the time interval between the detecting pulsed laser and the heating pulsed laser, a higher time precision is achieved. Furthermore, because a bandwidth of the heating laser is less limited, a higher energy may be used to heat the sample; as the detecting laser per se has a lower energy, a thermal drift of the laser itself is avoided. As a consequence, a higher data precision is achieved, and in-situ nondestructive non-contact measurement of the 2D nanomaterial with a substrate is realized. In addition, the thermal diffusivity of the 2D nanomaterial with a substrate and that of the suspended 2D nanomaterial may be compared with this method, and an effect of an interface effect on the thermal conduction characteristic of 2D nanomaterial may be studied well.

In other embodiments of the present disclosure, there is provided a dual-wavelength laser flash Raman spectroscopy system for thermophysical characterization of a 2D nanomaterial, which will be described in detail with reference to Figs. 4-15.

In embodiments of the present disclosure, as illustrated in Fig. 4, the system includes: a sample chamber 100, a heating device 200, a detecting device 300 and a thermophysical parameter determining device 400. The sample chamber 100 is configured to receive a sample $A$ including the 2D nanomaterial. A first output optical path $a$ of the heating device 200 is connected to the sample chamber 100, and a heating pulsed laser formed by the heating device 200 is configured to heat the sample $A$. A second output optical path $b$ of the detecting device 300 is connected to the sample chamber 100, and a detecting pulsed laser formed by the detecting device 300 is configured to detect temperature rise data of the sample $A$. The thermophysical parameter determining device 400 is configured to determine a thermophysical parameter of the sample $A$ based on the temperature rise data. The first output optical path $a$ partially overlaps with the second output optical path b. The heating pulsed laser formed by the heating device 200 and the detecting pulsed laser formed by the detecting device 300 have different wavelengths and same pulse period.

In the present disclosure, two pulsed lasers with different wavelengths and same pulse period are used. The heating pulsed laser is used first to heat the sample, and then the detecting pulsed laser is used to detect the sample. Therefore, the sample is heated by the heating pulsed laser and detected by the detecting pulsed laser at different stages, respectively, thereby avoiding the influence of a high laser power on the monochromaticity of the laser and the further influence on the measurement precision. And the time deviation $t_d$ between the detecting pulsed laser and the heating pulsed laser is regulated by a double-channel digital signal generator, thus the temporal precision of the measurement can reach 100 ps. Moreover, measurement errors are avoided as no lens zooming is needed. As a result, a thermophysical parameter of the sample determined with this system has a better accuracy and a higher sensitivity.

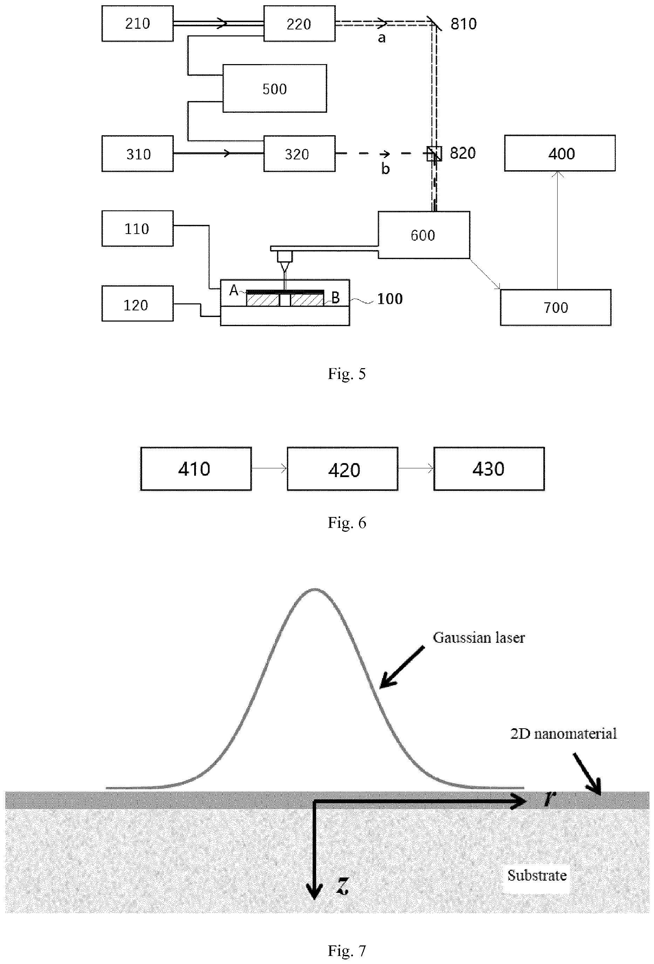

In embodiments of the present disclosure, the heating pulsed laser and the detecting pulsed laser are each formed by modulating a continuous laser with an electro-optical modulator and a digital signal generator. Specifically, as illustrated in Fig. 5, the heating device 200 includes a first laser 210 and a first electro-optical modulator 220. The first laser 210 is configured to form a heating laser; and the first electro-optical modulator 220 is disposed in an optical path of the heating laser and configured to convert the heating laser to the heating pulsed laser. The detecting device 300 includes a second laser 310 and a second electro-optical modulator 320. The second laser 310 is configured to form a detecting laser; and the second electro-optical modulator 320 is disposed in an optical path of the detecting laser and configured to convert the detecting laser to the detecting pulsed laser. Therefore, by converting the continuous laser into the pulsed laser with the electro-optical modulator, the heating pulsed laser and the detecting pulsed laser with different wavelengths and same pulse period can be obtained.

In embodiments of the present disclosure, the first laser 210 is not limited to a specific type, as long as the first laser 210 is a single transverse mode ion laser, a single longitudinal mode ion laser, or a solid laser with a constant laser power and complex Gaussian distribution, and has an output optical power not less than 500 mW, which can be selected by those skilled in the art according to the specific materials of the sample and the substrate to be detected, and will not be elaborated herein.

In embodiments of the present disclosure, the second laser 310 is not limited to a specific type, as long as the second laser 310 is a single transverse mode ion laser, a single longitudinal mode ion laser, or a solid laser with a constant laser power and complex Gaussian distribution, and has a line width not greater than 1 nm, which can be selected by those skilled in the art according to specific requirements of Raman spectroscopy testing, and will not be elaborated herein.

In embodiments of the present disclosure, as illustrated in Fig. 5, the system further includes a double-channel digital signal generator 500. The double-channel digital signal generator 500 is electrically connected to the first electro-optical modulator 220 and the second electro-optical modulator 320, respectively, and configured to regulate the pulse periods of the heating pulsed laser and the detecting pulsed laser. With the double-channel digital signal generator 500, the first electro-optical modulator 220 and the second electro-optical modulator 320 can be adjusted at the same time, so as to better adjust a first pulse duration $t_h$ and a first time interval $t_c$ of the heating pulsed laser, a second pulse duration $t_p$ of the detecting pulsed laser, and a time deviation $t_d$ between the heating pulsed laser and the detecting pulsed laser.

In embodiments of the present disclosure, as illustrated in Fig. 5, the system further includes a Raman spectrometer 600. The Raman spectrometer 600 may be disposed in overlapped optical path of the first output optical path $a$ and the second output optical path $b$ and connected to the sample chamber 100, and configured to collect Raman signals of the sample $A$ under the detecting pulsed laser. Thus, the Raman spectrum of the sample $A$ can be determined by the Raman spectrometer 600 based on the wavelength of detecting pulsed laser.

In embodiments of the present disclosure, as illustrated in Fig. 5, the system further includes a temperature rise determining unit 700. The temperature rise determining unit 700 is connected to the Raman spectrometer 600 and the thermophysical parameter determining device 400, respectively, and configured to determine the temperature rise data of the sample based on a shift value of a characteristic peak of the 2D nanomaterial in the Raman signals. In some embodiments, the sample of the 2D nanomaterial may be scanned in advance with a continuous detecting laser at different temperatures to obtain Raman spectrums. Based on shift values of a characteristic peak of the 2D nanomaterial in the Raman spectrums over the temperature, a relation curve between a peak shift of the Raman characteristic peak of the sample and the temperature rise can be calibrated. Therefore, an average temperature rise of the sample during the second pulse duration $t_p$ can be deduced directly by the temperature rise determining unit 700 based on a corresponding shift value of the characteristic peak in the Raman spectrum, which is convenient and efficient. As the second pulse duration $t_p$ is very short, the average temperature rise of the sample may be approximated as a temperature at $t$ time point.

In embodiments of the present disclosure, for a sample $A$ provided with a substrate $B$ below a lower surface thereof, the Raman spectrometer 600 is capable of collecting Raman signals of the sample and the substrate under the detecting pulsed laser, and the temperature rise determining unit 700 is capable of determining first temperature rise data of the sample and second temperature rise data of the substrate based on the shift value of the characteristic peak of the 2D nanomaterial and a shift value of a characteristic peak of the substrate in the Raman signals, respectively. Thus, the temperature rise data of sample $A$ and the temperature rise data of substrate $B$ can be obtained at the same time, which can be used to calculate the thermophysical parameters, like a thermal diffusivity $\alpha$ and a thermal conductivity $Å$ of the sample of the 2D nanomaterial, and a thermal contact resistance $g$ between the 2D nanomaterial and the substrate.

In embodiments of the present disclosure, the 2D nanomaterial to be detected may be a 2D non-metallic material, and the sample of the 2D nanomaterial may be a nano-film, so that a Raman characteristic peak obtained from the nano-film sample of the 2D non-metallic material will has a better intensity, thereby facilitating to calculate the temperature rise data of the sample more accurately. In some embodiments of the present disclosure, the 2D nanomaterial to be detected may be graphene, silylene or phosphorene. Therefore, these 2D nano-film materials having significant Raman characteristic peaks can be used in this method, and the thermophysical parameter tested by this method has a higher accuracy.

In embodiments of the present disclosure, the substrate $B$ includes silicon dioxide, so that the substrate also has a Raman characteristic peak. Consequently, the temperature rise of the substrate can be determined, and the thermophysical parameter of the 2D nanomaterial can be calculated more accurately.

In embodiments of the present disclosure, the wavelength of the detecting pulsed laser is greater than that of the heating pulsed laser, so that the Raman spectrum determined based on the wavelength of the detecting pulsed laser will not be disturbed by heating pulse signals. In embodiments of the present disclosure, an intensity of the detecting pulsed laser irradiating onto an upper surface of the sample is less than 3 mW, which will not cause temperature rise of the sample of the 2D nanomaterial.

In embodiments of the present disclosure, as illustrated in Fig. 5, the sample chamber 100 may be connected to a vacuum pump 110, and a vacuum degree in the sample chamber 100 may be less than $10^{-3}$ Pa. Using a two-level vacuum system including a vacuum pump and a molecular vacuum pump, natural convection in the sample chamber 100 is effectively eliminated, thereby making the testing precision of the system more accurate. In embodiments of the present disclosure, as illustrated in Fig. 5, a temperature control platform 120 is connected to a sample holder of the sample chamber 100, and may control a precision of the ambient temperature to be $\pm$ 0.1 K. Therefore, using the above temperature control platform with such a high precision enables the thermophysical parameter of the sample of the 2D nanomaterial acquired by the system to have a higher precision and a better accuracy.

In some embodiments of the present disclosure, as illustrated in Fig. 5, the system may further include a plane mirror 810 and a half mirror 820. The plane mirror 810 is capable of reflecting the first output optical path *a* to the Raman spectrometer 600. The half mirror 820 is disposed in a reflected optical path of the first output optical path *a* by the plane mirror 810, and is capable of reflecting the second output optical path *b* to the Raman spectrometer 600, without affecting the first output optical path *a,* thereby achieving coincidence of the first output optical path *a* and the second output optical path *b* between the half mirror 820 and the Raman spectrometer 600.

In some embodiments of the present disclosure, as illustrated in Fig. 6, the thermophysical parameter determining device may include a modeling unit 410 configured to establish an unsteady heat conduction equation set of the sample in a cooling stage.

In some embodiments of the present disclosure, for a sample provided with a substrate, the modeling unit 210 is configured to establish the unsteady heat conduction equation set of the sample coupled with the substrate in the cooling stage as follows:

$$
\begin{cases}
\dfrac{\partial^2 \theta_s(r,t)}{\partial r^2} + \dfrac{1}{r}\dfrac{\partial \theta_s(r,t)}{\partial r} - \dfrac{g\left(\theta_s(r,t) - \theta_s(r,0,t)\right)}{\lambda_s \delta} = \dfrac{1}{\alpha_s}\dfrac{\partial \theta_s(r,t)}{\partial t} \\[2ex]
\dfrac{\partial^2 \theta_b(r,z,t)}{\partial r^2} + \dfrac{1}{r}\dfrac{\partial \theta_b(r,z,t)}{\partial r} + \dfrac{\partial^2 \theta_b(r,z,t)}{\partial z^2} = \dfrac{1}{\alpha_b}\dfrac{\partial \theta_b(r,z,t)}{\partial t} \\[2ex]
\dfrac{\partial \theta_s(0)}{\partial r} = \dfrac{\partial \theta_b(0,z)}{\partial r} = 0 \\[2ex]
\theta_s(\infty,t) = \theta_b(\infty,z,t) = 0 \\[2ex]
\theta_b(r,\infty,t) = 0 \\[2ex]
-\lambda_b \dfrac{\partial \theta_b(r,0,t)}{\partial z} = g\left(\theta_s(r,t) - \theta_b(r,0,t)\right) \\[2ex]
\theta_s(r,0) = \theta_{s0}(r) \\[2ex]
\theta_b(r,z,0) = \theta_{b0}(r,z)
\end{cases}
$$

where a Gaussian average temperature rise of the sample versus the time *t* is

$$\overline{\theta}_s(t) = 2\pi \int_0^\infty \theta_s(r,t) q_p \exp\left(-r^2 / r_p^2\right) r\,dr ,$$

a Gaussian average temperature rise at a surface of the substrate versus the time *t* is

$$\overline{\theta}_b(t) = 2\pi \int_0^\infty \theta_b(r,0,t) q_p \exp\left(-r^2 / r_p^2\right) r\,dr ,$$

a steady-state temperature rise of the sample is $\overline{\theta}_{s0} = 2\pi \int_0^\infty \theta_{s0}(r) q_p \exp\left(-r^2 / r_p^2\right) r\,dr$ ,

a steady-state temperature rise of the substrate is $\overline{\theta}_{b0} = 2\pi \int_0^\infty \theta_{b0}(r,0) q_p \exp\left(-r^2 / r_p^2\right) r\,dr$ ,

a Gaussian average constant of a detecting laser is $q_p = 1 / \pi r_p^2$ , $\alpha_s$ is a thermal diffusivity of the sample, $\alpha_b$ is a thermal diffusivity of the substrate, and *g* is a contact thermal conductivity between the sample and the substrate.

In some embodiments of the present disclosure, for a suspended sample, the modeling unit 410 is configured to establish the unsteady heat conduction equation set of the sample in the cooling stage as follows:

$$\begin{cases} \dfrac{\partial^2 \theta_s(r,t)}{\partial r^2} + \dfrac{1}{r}\dfrac{\partial \theta_s(r,t)}{\partial r} = \dfrac{1}{\alpha_s}\dfrac{\partial \theta_s(r,t)}{\partial t} \\[2mm] \dfrac{\partial \theta_s(0)}{\partial r} = 0 \\[2mm] \theta_s(\infty,t) = 0 \\[2mm] \theta_s(r,0) = \theta_{s0}(r) \end{cases}$$

where a Gaussian average temperature rise of the sample versus the time $t$ is

$$\overline{\theta}_s(t) = 2\pi\int_0^\infty \theta_s(r,t)q_p\exp\left(-r^2/r_p^2\right)r\,dr \; ,$$

a steady-state temperature rise of the sample is

$$\overline{\theta}_{s0} = 2\pi\int_0^\infty \theta_{s0}(r)q_p\exp\left(-r^2/r_p^2\right)r\,dr \; ,$$

a Gaussian average constant of a detecting laser is

$$q_p = 1/\pi r_p^2 \; ,$$ and $\alpha_s$ is a thermal diffusivity of the sample.

In embodiments of the present disclosure, as illustrated in Fig. 6, the thermophysical parameter determining device may further include a data processing unit 420 connected to the modeling unit 410 and configured to perform a dimensionless processing on the unsteady heat conduction equation set.

In embodiments of the present disclosure, as illustrated in Fig. 6, the thermophysical parameter determining device may further include a thermophysical parameter determining unit 430. The thermophysical parameter determining unit 430 is connected to the data processing unit 420 and configured to perform a multi-parameter fitting on the dimensionless processed unsteady heat conduction equation set and determine the thermophysical parameter of the sample.

In embodiments of the present disclosure, the thermophysical parameter includes at least one of thermal conductivity, thermal diffusivity and contact thermal conductivity. In some embodiments of the present disclosure, for the sample provided with the substrate below the lower surface thereof, the thermophysical parameter obtainable by the system includes the thermal diffusivity $\alpha_s$ and thermal conductivity $\lambda_s$ of the sample, and contact thermal conductivity $g$ between the sample and the substrate. In some embodiments of the present disclosure, for the suspended sample, the thermophysical parameter obtainable by the system only includes the thermal diffusivity $\alpha_s$ of the sample.

According to embodiments of the present disclosure, a system for testing a thermophysical parameter of a 2D nanomaterial is provided. The system includes a heating device and a detecting device, the heating device is capable of providing the heating pulsed laser for the sample chamber, and the detecting device is capable of providing the detecting pulsed laser for the sample chamber. Therefore, the stronger heating pulsed laser formed by the heating device may heat the sample, then the detecting pulsed laser formed by the detecting device and having a wavelength different from that of the heating pulsed laser is used to detect the sample during a time interval of the heating pulsed laser, and the thermophysical parameter determining device is capable of determining the thermophysical parameter of the sample based on acquired temperature rise data of the sample. Moreover, the system has a higher accuracy, a better precision, and a higher sensitivity.

The present disclosure will be described below with reference to the following examples. It should be noted that, these examples are only illustrative, and shall not be construed to limit the present disclosure in any way. The scope of the present invention is solely limited as defined by the appended claims.

**Example 1**

In this example, a thermophysical parameter of a 2D nanomaterial is determined.

Fig. 7 illustrates a physical model of a sample of the 2D nanomaterial provided with a substrate. Under vacuum environment, a continuous heating laser which conforms to Gaussian distribution and has a spot radius $r_h$ is used to heat the sample of the 2D nanomaterial and the substrate. As the heating laser conforms to the Gaussian distribution and is centrally symmetrical, the sample conforms to a one-dimensional cylindrical coordinate heat conduction equation, and the substrate conforms to a two-dimensional cylindrical coordinate heat conduction equation. When a steady state is reached, a continuous detecting laser having a power less than 3 mW and a spot radius $r_p$ is used to measure a Raman spectrum of the sample and the substrate. A steady-state Gaussian average temperature rise $\overline{\theta}_{s0}$ of the sample and a steady-state Gaussian average temperature rise $\overline{\theta}_{b0}$ at a surface of the substrate may be determined based on a shift of a Raman characteristic peak of the sample and a shift of a Raman characteristic peak of the substrate, respectively. Natural convection heat transfer under the vacuum environment is negligible.

The continuous heating laser is modulated into a heating pulsed laser, the continuous detecting laser is modulated into a detecting pulsed laser, and pulse sequences of the heating pulsed laser and the detecting pulsed laser are as shown in Fig. 8. By changing a time deviation $t_d$ between the detecting pulsed laser and the heating pulsed laser, a temperature rise curve $\overline{\theta_s}(t)$ of the sample and a temperature rise curve $\overline{\theta_b}(t)$ at a surface of the substrate over time in a cooling stage are determined at the same time. The temperature rise curve $\overline{\theta_s}(t)$ is dimensionless processed based on a steady-state temperature rise $\overline{\theta_{s0}}$ of the sample and the temperature rise curve $\overline{\theta_b}(t)$ is dimensionless processed based on a steady-state temperature rise $\overline{\theta_{b0}}$ of the substrate, to eliminate an influence of a laser absorptivity on measurement results.

Based on the physical model of sample of the 2D nanomaterial provided with the substrate, an unsteady heat conduction equation set of the sample and the substrate in the cooling stage is established, as shown in equations (1) to (8)

$$\frac{\partial^2 \theta_s(r,t)}{\partial r^2} + \frac{1}{r}\frac{\partial \theta_s(r,t)}{\partial r} - \frac{g\left(\theta_s(r,t) - \theta_s(r,0,t)\right)}{\lambda_s \delta} = \frac{1}{\alpha_s}\frac{\partial \theta_s(r,t)}{\partial t} \qquad (1)$$

$$\frac{\partial^2 \theta_b(r,z,t)}{\partial r^2} + \frac{1}{r}\frac{\partial \theta_b(r,z,t)}{\partial r} + \frac{\partial^2 \theta_b(r,z,t)}{\partial z^2} = \frac{1}{\alpha_b}\frac{\partial \theta_b(r,z,t)}{\partial t} \qquad (2)$$

$$\frac{\partial \theta_s(0)}{\partial r} = \frac{\partial \theta_b(0,z)}{\partial r} = 0 \qquad (3)$$

$$\theta_s(\infty,t) = \theta_b(\infty,z,t) = 0 \qquad (4)$$

$$\theta_b(r,\infty,t) = 0 \qquad (5)$$

$$-\lambda_b \frac{\partial \theta_b(r,0,t)}{\partial z} = g\left(\theta_s(r,t) - \theta_b(r,0,t)\right) \qquad (6)$$

$$\theta_s(r,0) = \theta_{s0}(r) \qquad (7)$$

$$\theta_b(r,z,0) = \theta_{b0}(r,z) \qquad (8).$$

where $\alpha_s$ is a thermal diffusivity of the sample, $\alpha_b$ is a thermal diffusivity of the substrate, $\lambda_s$ is a thermal conductivity of the sample, $\lambda_b$ is a thermal conductivity of the substrate, $\delta$ a thickness of the sample, and $g$ is a contact thermal conductivity between the sample and the substrate. A Gaussian average temperature rise of the sample determined in virtue of the shift of the Raman spectrum may be expressed as $\overline{\theta}_s(t) = 2\pi \int_0^\infty \theta_s(r,t) q_p \exp\left(-r^2 / r_p^2\right) r dr$ , a Gaussian average temperature rise at the surface of the substrate may be expressed as

$$\overline{\theta}_b(t) = 2\pi \int_0^\infty \theta_b(r,0,t) q_p \exp\left(-r^2/r_p^2\right) r dr$$

. $\theta_{s0}(r)$ is a steady-state temperature distribution of the sample,

$$\overline{\theta}_{s0} = 2\pi \int_0^\infty \theta_{s0}(r) q_p \exp\left(-r^2/r_p^2\right) r dr$$

, $\theta_{b0}(r,z)$ is a steady-state temperature distribution of the substrate,

$$\overline{\theta}_{b0} = 2\pi \int_0^\infty \theta_{b0}(r,0) q_p \exp\left(-r^2/r_p^2\right) r dr$$

, $q_p$ is a Gaussian average constant corresponding to the detecting laser, $q_p = 1/\pi r_p^2$ .

The equations are dimensionless processed. It is deduced that, a dimensionless Gaussian average temperature rise curve $\overline{\theta}_s(t)/\overline{\theta}_{s0}$ of the sample over time and a dimensionless Gaussian average temperature rise curve $\overline{\theta}_b(t)/\theta_{b0}$ at the surface of the substrate over time are only related to dimensionless quantities $Fo_s = \alpha_s t_h/(\lambda_s \delta/g)$, $Fo_b = \alpha_b t_h/(\lambda_s \delta/g)$

and $\kappa = \lambda_b / \sqrt{\lambda_s g \delta}$ . By fitting the dimensionless temperature rise curves of the sample and the substrate, a

thermal diffusivity $\alpha_s = \alpha_b Fo_s/Fo_b$ and a thermal conductivity $\lambda_s = \lambda_b \sqrt{\alpha_b t_h / Fo_b} / \delta \kappa$ of the sample of the 2D nanomaterial, and a thermal contact resistance $g = \lambda_b \sqrt{Fo_b / \alpha_b t_h} / \kappa$ between the sample and the substrate are obtained.

In this example, the 2D nanomaterial is graphene, the substrate includes silicon dioxide, and their characteristic physical properties are used to simulate the dimensionless Gaussian average temperature rise curve $\overline{\theta}_s(t)/\overline{\theta}_{s0}$ of the sample over time and the dimensionless Gaussian average temperature rise curve $\overline{\theta}_b(t)/\overline{\theta}_{b0}$ at the surface of the substrate over time, to obtain influences of the thermal diffusivity $\alpha_s$ and the thermal conductivity $\lambda_s$ of the 2D nanomaterial, and the thermal contact resistance g between the 2D nanomaterial and the substrate on the two dimensionless temperature rise curves, as illustrated in Figs. 9-14.

## Example 2

In this example, a thermophysical parameter of a 2D nanomaterial is determined according to substantially the same method and steps as Example 1, except for that the sample is a suspended sample of the 2D nanomaterial, and an unsteady heat conduction equation set of the sample in a cooling stage is as shown in equations (9) to (12):

$$\frac{\partial^2 \theta_s(r,t)}{\partial r^2} + \frac{1}{r}\frac{\partial \theta_s(r,t)}{\partial r} = \frac{1}{\alpha_s}\frac{\partial \theta_s(r,t)}{\partial t} \tag{9}$$

$$\frac{\partial \theta_s(0)}{\partial r} = 0 \tag{10}$$

$$\theta_s(\infty,t) = 0 \tag{11}$$

$$\theta_s(r,0) = \theta_{s0}(r) \tag{12}.$$

In this example, the equations are dimensionless processed. It is deduced that, a dimensionless Gaussian average temperature rise curve $\overline{\theta}_s(t)/\overline{\theta}_{s0}$ of the sample over time is only related to a thermal diffusivity $\alpha_s$ of the sample,

and an influence of the thermal diffusivity $\alpha_s$ on the dimensionless Gaussian average temperature rise curve $\overline{\theta_s}(t)/\overline{\theta_{s0}}$ of the sample is as shown in Fig. 15.

The present disclosure is not limited to the above described embodiments, a test principle of the dual-wavelength laser flash Raman spectroscopy method provided in the present disclosure may be widely used in the related art, and the present disclosure may be implemented by various other embodiments. The scope of the present invention is solely limited as defined by the appended claims. For example, based on an idea of separating the heating laser and the detecting laser proposed in the dual-wavelength laser flash Raman spectroscopy system, the wavelength of the detecting laser is changed without changing the heating laser, so as to change a measurement range of the laser spot, thereby achieving confocal variable spot measurement.

In the present invention, unless specified or limited otherwise, the terms "mounted," "connected," "coupled," "fixed" and the like are used broadly, and may be, for example, fixed connections, detachable connections, or integral connections; may also be mechanical or electrical connections; may also be direct connections or indirect connections via intervening structures; may also be inner communications of two elements, which can be understood by those skilled in the art according to specific situations.

In addition, terms such as "first" and "second" are used herein for purposes of description and are not intended to indicate or imply relative importance or significance or to imply the number of indicated technical features. Thus, the feature defined with "first" and "second" may comprise one or more of this feature. In the description of the present invention, a phase of "a plurality of" means two or more than two, such as two, three, *etc.,* unless specified otherwise.

Reference throughout this specification to "an embodiment," "some embodiments," "an example," "a specific example," or "some examples," means that a particular feature, structure, material, or characteristic described in connection with the embodiment or example is included in at least one embodiment or example of the present disclosure. Thus, the appearances of the phrases such as "in some embodiments," "in one embodiment", "in an embodiment", "in another example," "in an example," "in a specific example," or "in some examples," in various places throughout this specification are not necessarily referring to the same embodiment or example of the present disclosure. Furthermore, within the scope defined by the appended claims, the particular features, structures, materials, or characteristics may be combined in any suitable manner in one or more embodiments or examples. In addition, in the absence of contradiction, those skilled in the art can combine the different embodiments or examples described in this specification, or combine the features of different embodiments or examples.

**Claims**

1. A dual-wavelength laser flash Raman spectroscopy method for thermophysical characterization of a 2D nanomaterial, comprising:

   (1) acquiring temperature rise data of a sample comprising the 2D nanomaterial by heating the sample with a heating pulse from a heating pulsed laser and then generating Raman scattering in the sample with a probing pulse from a detecting pulsed laser, the heating pulse having a wavelength different from a wavelength of the probing pulse, and the heating pulse and the probing pulse having the same pulse period; and
   (2) determining a thermophysical parameter of the sample based on the temperature rise data,

   wherein step (1) further comprises:

   (1-1) heating, during a first pulse duration $t_h$, the sample with the heating pulse from the heating pulsed laser to enable the sample to reach a steady temperature $T_2$ from an ambient temperature $T_1$ which is controlled by a temperature control platform connected to a sample holder of a sample chamber for the sample;
   (1-2) then cooling the sample from the steady temperature $T_2$ to the ambient temperature $T_1$ during a first time interval $t_c$, and detecting a Raman signal of the sample by generating Raman scattering in the sample with the probing pulse from the detecting pulsed laser, the probing pulse starting at a time delay $t_d$ after the end of the first pulse duration $t_h$ and during a second pulse duration $t_p$ within the first time interval $t_c$, to acquire a Raman spectrum of the sample from the detected Raman signal; and
   (1-3) determining, based on a linear relationship between a Raman spectrum peak shift and a temperature rise, a temperature rise $T_3$ of the sample during the second pulse duration $t_p$ based on a shift value of a characteristic peak of the 2D nanomaterial in the Raman spectrum acquired in step (1-2).

2. The method according to claim 1, wherein the heating pulsed laser and the detecting pulsed laser are each formed by modulating a continuous laser with an electro-optical modulator and a digital signal generator;

optionally, the wavelength of the detecting pulsed laser is greater than that of the heating pulsed laser;
optionally, an intensity of the detecting pulsed laser irradiating onto an upper surface of the sample is less than 3 mW;
optionally, step (1) is carried out in a vacuum environment with a vacuum degree less than $10^{-3}$ Pa.

**3.** The method according to claim 1 or 2, wherein a substrate is provided below a lower surface of the sample, and step (1-2) comprises:

detecting Raman signals of the sample and the substrate by generating Raman scattering in the sample and the substrate with the probing pulse from the detecting pulsed laser during the second pulse duration $t_p$ to acquire a Raman spectrum of the sample and the substrate from the detected Raman signals; and
step (1-3) comprises:
determining the temperature rise $T_3$ of the sample and a temperature rise $T_4$ of the substrate during the second pulse duration $t_p$ based on the shift value of the characteristic peak of the 2D nanomaterial and a shift value of a characteristic peak of the substrate in the Raman spectrum, respectively.

**4.** The method according to claim 3, wherein the 2D nanomaterial comprises a 2D non-metallic nano-film material, preferably graphene, silylene or phosphorene, and
the substrate comprises silicon dioxide or other non-metallic materials having Raman characteristic peaks.

**5.** The method according to claim 1 or 2, wherein the thermophysical parameter comprises at least one of thermal conductivity, thermal diffusivity, and contact thermal conductivity; and step (2) further comprises:

(2-1) establishing an unsteady heat conduction equation set in the cooling step of the step (1-2);
(2-2) performing a dimensionless processing on the unsteady heat conduction equation set; and
(2-3) performing a multi-parameter fitting on the dimensionless processed unsteady heat conduction equation set based on the temperature rise data, to obtain the thermophysical parameter of the sample,
wherein the sample is coupled with a substrate, and the unsteady heat conduction equation set of the sample coupled with the substrate in the cooling step is established as follows:

$$
\begin{cases}
\dfrac{\partial^2 \theta_s(r,t)}{\partial r^2} + \dfrac{1}{r}\dfrac{\partial \theta_s(r,t)}{\partial r} - \dfrac{g\big(\theta_s(r,t) - \theta_s(r,0,t)\big)}{\lambda_s \delta} = \dfrac{1}{\alpha_s}\dfrac{\partial \theta_s(r,t)}{\partial t} \\[2ex]
\dfrac{\partial^2 \theta_b(r,z,t)}{\partial r^2} + \dfrac{1}{r}\dfrac{\partial \theta_b(r,z,t)}{\partial r} + \dfrac{\partial^2 \theta_b(r,z,t)}{\partial z^2} = \dfrac{1}{\alpha_b}\dfrac{\partial \theta_b(r,z,t)}{\partial t} \\[2ex]
\dfrac{\partial \theta_s(0)}{\partial r} = \dfrac{\partial \theta_b(0,z)}{\partial r} = 0 \\[2ex]
\theta_s(\infty,t) = \theta_b(\infty,z,t) = 0 \\[2ex]
\theta_b(r,\infty,t) = 0 \\[2ex]
-\lambda_b \dfrac{\partial \theta_b(r,0,t)}{\partial z} = g\big(\theta_s(r,t) - \theta_b(r,0,t)\big) \\[2ex]
\theta_s(r,0) = \theta_{s0}(r) \\[2ex]
\theta_b(r,z,0) = \theta_{b0}(r,z)
\end{cases}
$$

where
a Gaussian average temperature rise of the sample versus the time t is

$$\overline{\theta}_s(t) = 2\pi \int_0^\infty \theta_s(r,t) q_p \exp\!\big(-r^2 / r_p^2\big) r\,dr ,$$

a Gaussian average temperature rise at a surface of the substrate versus the time t is

$$\overline{\theta}_b(t) = 2\pi \int_0^\infty \theta_b(r,0,t) q_p \exp\!\big(-r^2 / r_p^2\big) r\,dr ,$$

a steady-state temperature rise of the sample is $\bar{\theta}_{s0} = 2\pi \int_0^\infty \theta_{s0}(r) q_p \exp\left(-r^2 / r_p^2\right) r dr$ ,

a steady-state temperature rise of the substrate is $\bar{\theta}_{b0} = 2\pi \int_0^\infty \theta_{b0}(r,0) q_p \exp\left(-r^2 / r_p^2\right) r dr$ ,

a Gaussian average constant of a detecting laser is $q_p = 1/\pi r_p^2$ , $\alpha_s$ is a thermal diffusivity of the sample, $\alpha_b$ is a thermal diffusivity of the substrate, and g is a contact thermal conductivity between the sample and the substrate,

or

the sample is a suspended sample, and the unsteady heat conduction equation set of the sample in the cooling step is as follows:

$$
\begin{cases}
\dfrac{\partial^2 \theta_s(r,t)}{\partial r^2} + \dfrac{1}{r}\dfrac{\partial \theta_s(r,t)}{\partial r} = \dfrac{1}{\alpha_s}\dfrac{\partial \theta_s(r,t)}{\partial t} \\[2ex]
\dfrac{\partial \theta_s(0)}{\partial r} = 0 \\[2ex]
\theta_s(\infty,t) = 0 \\[2ex]
\theta_s(r,0) = \theta_{s0}(r)
\end{cases}
$$

where

a Gaussian average temperature rise of the sample versus the time $t$ is $\bar{\theta}_s(t) = 2\pi \int_0^\infty \theta_s(r,t) q_p \exp\left(-r^2 / r_p^2\right) r dr$ ,

a steady-state temperature rise of the sample versus the time $t$ is $\bar{\theta}_{s0} = 2\pi \int_0^\infty \theta_{s0}(r) q_p \exp\left(-r^2 / r_p^2\right) r dr$ ,

a Gaussian average constant of a detecting laser is $q_p = 1/\pi r_p^2$ , and $\alpha_s$ is a thermal diffusivity of the sample.

6. The method according to claim 3 or 4, wherein the thermophysical parameter comprises at least one of thermal conductivity, thermal diffusivity, and contact thermal conductivity; and step (2) further comprises:

(2-1) establishing an unsteady heat conduction equation set in the cooling step of the step (1-2);
(2-2) performing a dimensionless processing on the unsteady heat conduction equation set; and
(2-3) performing a multi-parameter fitting on the dimensionless processed unsteady heat conduction equation set based on the temperature rise data, to obtain the thermophysical parameter of the sample,
wherein the sample is coupled with the substrate, and the unsteady heat conduction equation set of the sample coupled with the substrate in the cooling step is established as follows:

$$\left\{ \begin{array}{l} \dfrac{\partial^2 \theta_s(r,t)}{\partial r^2} + \dfrac{1}{r}\dfrac{\partial \theta_s(r,t)}{\partial r} - \dfrac{g\left(\theta_s(r,t)-\theta_s(r,0,t)\right)}{\lambda_s \delta} = \dfrac{1}{\alpha_s}\dfrac{\partial \theta_s(r,t)}{\partial t} \\[3mm] \dfrac{\partial^2 \theta_b(r,z,t)}{\partial r^2} + \dfrac{1}{r}\dfrac{\partial \theta_b(r,z,t)}{\partial r} + \dfrac{\partial^2 \theta_b(r,z,t)}{\partial z^2} = \dfrac{1}{\alpha_b}\dfrac{\partial \theta_b(r,z,t)}{\partial t} \\[3mm] \dfrac{\partial \theta_s(0)}{\partial r} = \dfrac{\partial \theta_b(0,z)}{\partial r} = 0 \\[3mm] \theta_s(\infty,t) = \theta_b(\infty,z,t) = 0 \\[3mm] \theta_b(r,\infty,t) = 0 \\[3mm] -\lambda_b \dfrac{\partial \theta_b(r,0,t)}{\partial z} = g\left(\theta_s(r,t)-\theta_b(r,0,t)\right) \\[3mm] \theta_s(r,0) = \theta_{s0}(r) \\[3mm] \theta_b(r,z,0) = \theta_{b0}(r,z) \end{array} \right.$$

where

a Gaussian average temperature rise of the sample versus the time $t$ is

$$\overline{\theta}_s(t) = 2\pi \int_0^\infty \theta_s(r,t) q_p \exp\left(-r^2/r_p^2\right) r dr$$

a Gaussian average temperature rise at a surface of the substrate versus the time $t$ is

$$\overline{\theta}_b(t) = 2\pi \int_0^\infty \theta_b(r,0,t) q_p \exp\left(-r^2/r_p^2\right) r dr$$

a steady-state temperature rise of the sample is $\overline{\theta}_{s0} = 2\pi \int_0^\infty \theta_{s0}(r) q_p \exp\left(-r^2/r_p^2\right) r dr$,

a steady-state temperature rise of the substrate is $\overline{\theta}_{b0} = 2\pi \int_0^\infty \theta_{b0}(r,0) q_p \exp\left(-r^2/r_p^2\right) r dr$,

a Gaussian average constant of a detecting laser is $q_p = 1/\pi r_p^2$, $\alpha_s$ is a thermal diffusivity of the sample, $\alpha_b$ is a thermal diffusivity of the substrate, and g is a contact thermal conductivity between the sample and the substrate.

**7.** A dual-wavelength laser flash Raman spectroscopy system for thermophysical characterization of a 2D nanomaterial, comprising:

a sample chamber (100) with a sample holder, configured to receive a sample comprising the 2D nanomaterial;
a temperature control platform (120) connected to the sample holder of the sample chamber (100);
a heating device (200) forming a heating pulsed laser configured to heat the sample, wherein a first output optical path (*a*) of the heating device (200) is connected to the sample chamber (100), and the heating device (200) comprises:

a first laser (210), configured to form a heating laser; and
a first electro-optical modulator (220), disposed in an optical path of the heating laser and configured to convert the heating laser to the heating pulsed laser;

a detecting device (300) forming a detecting pulsed laser configured to generate Raman scattering in the sample with a probing pulse from the detecting pulsed laser in order to detect temperature rise data of the sample, wherein a second output optical path (*b*) of the detecting device (300) is connected to the sample chamber (100), and the detecting device (300) comprises:

a second laser (310), configured to form a detecting laser; and
a second electro-optical modulator (320), disposed in an optical path of the detecting laser and configured to convert the detecting laser to the detecting pulsed laser;

a double-channel digital signal generator (500), electrically connected to the first electro-optical modulator (220) and the second electro-optical modulator (320), respectively, and configured to regulate pulse periods of the heating pulsed laser and the detecting pulsed laser to carry out the method according to any one of claims 1 to 6;

a Raman spectrometer (600), disposed in overlapped optical path of the first output optical path (*a*) and the second output optical path (*b*) and connected to the sample chamber (100), and configured to collect Raman signals of the sample under the detecting pulsed laser;

a temperature rise determining unit (700), connected to the Raman spectrometer (600), and configured to determine the temperature rise data of the sample based on a shift value of a characteristic peak of the 2D nanomaterial in the Raman signals; and

a thermophysical parameter determining device (400), configured to determine a thermophysical parameter of the sample based on the temperature rise data;

wherein the first output optical path (*a*) partially overlaps with the second output optical path (b), and the heating pulsed laser has a wavelength different from a wavelength of the detecting pulsed laser, and the heating pulsed laser and the detecting pulsed laser have the same pulse period.

8. The system according to claim 7, wherein the wavelength of the detecting pulsed laser is greater than that of the heating pulsed laser;

optionally, an intensity of the detecting pulsed laser irradiating onto an upper surface of the sample is less than 3 mW;

optionally, the system comprises a vacuum pump, and the sample chamber (100) is connected to the vacuum pump and has a vacuum degree less than $10^{-3}$ Pa.

9. The system according to claim 7 or 8, wherein the sample is provided with a substrate below a lower surface thereof, the Raman spectrometer (600) is configured to collect Raman signals of the sample and the substrate under the detecting pulsed laser, and the temperature rise determining unit (700) is configured to determine first temperature rise data of the sample and second temperature rise data of the substrate based on the shift value of the characteristic peak of the 2D nanomaterial and a shift value of a characteristic peak of the substrate in the Raman signals, respectively.

10. The system according to claim 9, wherein the 2D nanomaterial includes a 2D non-metallic nano-film material, preferably graphene, silylene or phosphorene, and
the substrate comprises silicon dioxide or other non-metallic materials having Raman characteristic peaks.

11. The system according to claim 7 or 8, wherein the thermophysical parameter determining device (400) comprises:

a modeling unit (410), configured to establish an unsteady heat conduction equation set of the sample in a cooling step;

a data processing unit (420), connected to the modeling unit (410) and configured to perform a dimensionless processing on the unsteady heat conduction equation set; and

a thermophysical parameter determining unit (430), connected to the data processing unit (420) and configured to perform a multi-parameter fitting on the dimensionless processed unsteady heat conduction equation set and determine the thermophysical parameter of the sample,

optionally, the thermophysical parameter comprises at least one of thermal conductivity, thermal diffusivity and contact thermal conductivity,

wherein the sample is coupled with a substrate, and the modeling unit (410) is configured to establish the unsteady heat conduction equation set of the sample coupled with the substrate in the cooling step as follows:

$$\begin{cases} \dfrac{\partial^2 \theta_s(r,t)}{\partial r^2} + \dfrac{1}{r}\dfrac{\partial \theta_s(r,t)}{\partial r} - \dfrac{g(\theta_s(r,t) - \theta_s(r,0,t))}{\lambda_s \delta} = \dfrac{1}{\alpha_s}\dfrac{\partial \theta_s(r,t)}{\partial t} \\[2mm] \dfrac{\partial^2 \theta_b(r,z,t)}{\partial r^2} + \dfrac{1}{r}\dfrac{\partial \theta_b(r,z,t)}{\partial r} + \dfrac{\partial^2 \theta_b(r,z,t)}{\partial z^2} = \dfrac{1}{\alpha_b}\dfrac{\partial \theta_b(r,z,t)}{\partial t} \\[2mm] \dfrac{\partial \theta_s(0)}{\partial r} = \dfrac{\partial \theta_b(0,z)}{\partial r} = 0 \\[2mm] \theta_s(\infty,t) = \theta_b(\infty,z,t) = 0 \\[2mm] \theta_b(r,\infty,t) = 0 \\[2mm] -\lambda_b \dfrac{\partial \theta_b(r,0,t)}{\partial z} = g(\theta_s(r,t) - \theta_b(r,0,t)) \\[2mm] \theta_s(r,0) = \theta_{s0}(r) \\[2mm] \theta_b(r,z,0) = \theta_{b0}(r,z) \end{cases}$$

where
a Gaussian average temperature rise of the sample versus the time $t$ is

$$\overline{\theta}_s(t) = 2\pi \int_0^\infty \theta_s(r,t) q_p \exp\left(-r^2 / r_p^2\right) r\,dr \quad,$$

a Gaussian average temperature rise at a surface of the substrate versus the time $t$ is

$$\overline{\theta}_b(t) = 2\pi \int_0^\infty \theta_b(r,0,t) q_p \exp\left(-r^2 / r_p^2\right) r\,dr \quad,$$

a steady-state temperature rise of the sample is $\overline{\theta}_{s0} = 2\pi \int_0^\infty \theta_{s0}(r) q_p \exp\left(-r^2 / r_p^2\right) r\,dr$ ,

a steady-state temperature rise of the substrate is $\overline{\theta}_{b0} = 2\pi \int_0^\infty \theta_{b0}(r,0) q_p \exp\left(-r^2 / r_p^2\right) r\,dr$ ,

a Gaussian average constant of a detecting laser is $q_p = 1 / \pi r_p^2$ , $\alpha_s$ is a thermal diffusivity of the sample, $\alpha_b$ is a thermal diffusivity of the substrate, and g is a contact thermal conductivity between the sample and the substrate,
or
the sample is a suspended sample, and the modeling unit (410) is configured to establish the unsteady heat conduction equation set of the sample in the cooling step as follows:

$$\begin{cases} \dfrac{\partial^2 \theta_s(r,t)}{\partial r^2} + \dfrac{1}{r}\dfrac{\partial \theta_s(r,t)}{\partial r} = \dfrac{1}{\alpha_s}\dfrac{\partial \theta_s(r,t)}{\partial t} \\[2mm] \dfrac{\partial \theta_s(0)}{\partial r} = 0 \\[2mm] \theta_s(\infty,t) = 0 \\[2mm] \theta_s(r,0) = \theta_{s0}(r) \end{cases}$$

where
a Gaussian average temperature rise of the sample versus the time $t$ is

$$\overline{\theta}_s(t) = 2\pi \int_0^\infty \theta_s(r,t) q_p \exp\left(-r^2 / r_p^2\right) r\,dr \quad,$$

a steady-state temperature rise of the sample versus the time $t$ is $\overline{\theta}_{s0} = 2\pi \int_0^\infty \theta_{s0}(r) q_p \exp\left(-r^2 / r_p^2\right) r\,dr$ ,

a Gaussian average constant of a detecting laser is $q_p = 1 / \pi r_p^2$ , and $\alpha_s$ is a thermal diffusivity of the sample.

**12.** The system according to claim 9 or 10, wherein the sample is coupled with the substrate, the modeling unit (410) is configured to establish the unsteady heat conduction equation set of the sample coupled with the substrate in the cooling stage as follows:

$$\begin{cases} \dfrac{\partial^2 \theta_s(r,t)}{\partial r^2} + \dfrac{1}{r}\dfrac{\partial \theta_s(r,t)}{\partial r} - \dfrac{g(\theta_s(r,t) - \theta_s(r,0,t))}{\lambda_s \delta} = \dfrac{1}{\alpha_s}\dfrac{\partial \theta_s(r,t)}{\partial t} \\[2mm] \dfrac{\partial^2 \theta_b(r,z,t)}{\partial r^2} + \dfrac{1}{r}\dfrac{\partial \theta_b(r,z,t)}{\partial r} + \dfrac{\partial^2 \theta_b(r,z,t)}{\partial z^2} = \dfrac{1}{\alpha_b}\dfrac{\partial \theta_b(r,z,t)}{\partial t} \\[2mm] \dfrac{\partial \theta_s(0)}{\partial r} = \dfrac{\partial \theta_b(0,z)}{\partial r} = 0 \\[2mm] \theta_s(\infty,t) = \theta_b(\infty,z,t) = 0 \\[2mm] \theta_b(r,\infty,t) = 0 \\[2mm] -\lambda_b \dfrac{\partial \theta_b(r,0,t)}{\partial z} = g(\theta_s(r,t) - \theta_b(r,0,t)) \\[2mm] \theta_s(r,0) = \theta_{s0}(r) \\[2mm] \theta_b(r,z,0) = \theta_{b0}(r,z) \end{cases}$$

wherein

a Gaussian average temperature rise of the sample versus the time $t$ is
$$\overline{\theta}_s(t) = 2\pi \int_0^\infty \theta_s(r,t) q_p \exp\left(-r^2/r_p^2\right) r \, dr ,$$
a Gaussian average temperature rise at a surface of the substrate versus the time $t$ is
$$\overline{\theta}_b(t) = 2\pi \int_0^\infty \theta_b(r,0,t) q_p \exp\left(-r^2/r_p^2\right) r \, dr ,$$

a steady-state temperature rise of the sample is $\overline{\theta}_{s0} = 2\pi \int_0^\infty \theta_{s0}(r) q_p \exp\left(-r^2/r_p^2\right) r \, dr$ ,

a steady-state temperature rise of the substrate is $\overline{\theta}_{b0} = 2\pi \int_0^\infty \theta_{b0}(r,0) q_p \exp\left(-r^2/r_p^2\right) r \, dr$ ,

a Gaussian average constant of a detecting laser is $q_p = 1/\pi r_p^2$ , $\alpha_s$ is a thermal diffusivity of the sample, $\alpha_b$ is a thermal diffusivity of the substrate, and $g$ is a contact thermal conductivity between the sample and the substrate.

**Patentansprüche**

**1.** Ein Laser-Flash-Raman-Spektroskopieverfahren mit zwei Wellenlängen zur thermophysikalischen Charakterisierung eines 2D-Nanomaterials, welches umfasst:

(1) Erfassen von Temperaturanstiegsdaten einer Probe, die das 2D-Nanomaterial umfasst, durch Erhitzen der Probe mit einem Heizimpuls eines gepulsten Heizlasers und anschließendes Erzeugen von Raman-Streuung in der Probe mit einem Detektionsimpuls eines gepulsten Detektionslasers, wobei der Heizimpuls eine Wellenlänge hat, die sich von einer Wellenlänge des Detektionsimpulses unterscheidet, und der Heizimpuls und der Detektionsimpuls die gleiche Impulsperiode haben; und
(2) Bestimmen eines thermophysikalischen Parameters der Probe basierend auf den Temperaturanstiegsdaten, wobei Schritt (1) ferner umfasst:

(1-1) Erwärmen der Probe während einer ersten Impulsdauer $t_h$ mit dem Heizimpuls des gepulsten Heizlasers, um es der Probe zu ermöglichen, eine konstante Temperatur $T_2$ von einer Umgebungstemperatur

$T_1$ aus zu erreichen, welche durch eine Temperatursteuerungsplattform gesteuert wird, die mit einem Probenhalter einer Probenkammer für die Probe verbunden ist;

(1-2) dann Abkühlen der Probe von der konstanten Temperatur $T_2$ auf die Umgebungstemperatur $T_1$ während eines ersten Zeitintervalls $t_c$ und Detektieren eines Raman-Signals der Probe durch Erzeugen von Raman-Streuung in der Probe mit dem Detektionsimpuls des gepulsten Detektionslasers, wobei der Detektionsimpuls mit einer Zeitverzögerung $t_d$ nach dem Ende der ersten Impulsdauer $t_h$ und während einer zweiten Impulsdauer $t_p$ innerhalb des ersten Zeitintervalls $t_c$ beginnt, um ein Raman-Spektrum der Probe aus dem detektierten Raman-Signal zu erfassen; und

(1-3) Bestimmen eines Temperaturanstiegs $T_3$ der Probe während der zweiten Impulsdauer $t_p$ auf der Grundlage einer linearen Beziehung zwischen einer Peakverschiebung im Raman-Spektrum und einem Temperaturanstieg, basierend auf einem Verschiebungswert eines charakteristischen Peaks des 2D-Nanomaterials in dem in Schritt (1-2) erfassten Raman-Spektrum.

2. Verfahren nach Anspruch 1, wobei der gepulste Heizlaser und der gepulste Detektionslaser jeweils durch Modulation eines kontinuierlichen Lasers mit einem elektro-optischen Modulator und einem digitalen Signalgenerator gebildet werden;

optional ist die Wellenlänge des gepulsten Detektionslasers größer als die des gepulsten Heizlasers;

optional ist die Intensität des gepulsten Detektionslasers, der auf eine obere Oberfläche der Probe strahlt, geringer als 3 mW;

optional wird Schritt (1) in einer Vakuumumgebung mit einem Vakuumgrad von weniger als $10^{-3}$ Pa durchgeführt.

3. Verfahren nach Anspruch 1 oder 2, wobei ein Substrat unter einer unteren Oberfläche der Probe vorgesehen ist, und Schritt (1-2) umfasst:

Detektieren von Raman-Signalen der Probe und des Substrats durch Erzeugen von Raman-Streuung in der Probe und dem Substrat mit dem Detektionsimpuls des gepulsten Detektionslasers während der zweiten Pulsdauer $t_p$, um ein Raman-Spektrum der Probe und des Substrats aus den detektierten Raman-Signalen zu erfassen; und

Schritt (1-3) umfasst:

Bestimmen des Temperaturanstiegs $T_3$ der Probe und eines Temperaturanstiegs $T_4$ des Substrats während der zweiten Pulsdauer $t_p$ auf der Grundlage des Verschiebungswerts des charakteristischen Peaks des 2D-Nanomaterials bzw. eines Verschiebungswerts eines charakteristischen Peaks des Substrats in dem Raman-Spektrum.

4. Verfahren nach Anspruch 3, wobei das 2D-Nanomaterial ein nicht-metallisches 2D-Nanofilmmaterial, vorzugsweise Graphen, Silylen oder Phosphoren, umfasst und

das Substrat Siliziumdioxid oder andere nicht-metallische Materialien mit charakteristischen Raman-Peaks umfasst.

5. Verfahren nach Anspruch 1 oder 2, wobei der thermophysikalische Parameter mindestens einen der Parameter Wärmeleitfähigkeit, Temperaturleitfähigkeit und Kontaktwärmeleitfähigkeit umfasst; und Schritt (2) ferner umfasst:

(2-1) Aufstellen eines Gleichungssatzes für instationäre Wärmeleitung im Abkühlungsschritt des Schritts (1-2);

(2-2) Durchführen einer dimensionslosen Verarbeitung des Gleichungssatzes für instationäre Wärmeleitung; und

(2-3) Durchführen einer Multiparameteranpassung an dem dimensionslos verarbeiteten Gleichungssatz für instationäre Wärmeleitung auf Grundlage der Temperaturanstiegsdaten, um den thermophysikalischen Parameter der Probe zu erhalten,

wobei die Probe mit einem Substrat gekoppelt ist und der Gleichungssatz für instationäre Wärmeleitung der mit dem Substrat gekoppelten Probe im Abkühlungsschritt wie folgt aufgestellt wird:

$$\left\{ \begin{array}{l} \dfrac{\partial^2 \theta_s(r,t)}{\partial r^2} + \dfrac{1}{r}\dfrac{\partial \theta_s(r,t)}{\partial r} - \dfrac{g\left(\theta_s(r,t) - \theta_s(r,0,t)\right)}{\lambda_s \delta} = \dfrac{1}{\alpha_s}\dfrac{\partial \theta_s(r,t)}{\partial t} \\[3mm] \dfrac{\partial^2 \theta_b(r,z,t)}{\partial r^2} + \dfrac{1}{r}\dfrac{\partial \theta_b(r,z,t)}{\partial r} + \dfrac{\partial^2 \theta_b(r,z,t)}{\partial z^2} = \dfrac{1}{\alpha_b}\dfrac{\partial \theta_b(r,z,t)}{\partial t} \\[3mm] \dfrac{\partial \theta_s(0)}{\partial r} = \dfrac{\partial \theta_b(0,z)}{\partial r} = 0 \\[3mm] \theta_s(\infty,t) = \theta_b(\infty,z,t) = 0 \\[3mm] \theta_b(r,\infty,t) = 0 \\[3mm] -\lambda_b \dfrac{\partial \theta_b(r,0,t)}{\partial z} = g\left(\theta_s(r,t) - \theta_b(r,0,t)\right) \\[3mm] \theta_s(r,0) = \theta_{s0}(r) \\[3mm] \theta_b(r,z,0) = \theta_{b0}(r,z) \end{array} \right.$$

Wobei

ein Gaußscher Durchschnitt des Temperaturanstiegs der Probe nach der Zeit $t$ ist:

$$\overline{\theta_s}(t) = 2\pi \int_0^\infty \theta_s(r,t) q_p \exp\left(-r^2 / r_p^2\right) r\, dr$$ ,

ein Gaußscher Durchschnitt des Temperaturanstiegs an einer Oberfläche des Substrats nach der Zeit t ist:

$$\overline{\theta_b}(t) = 2\pi \int_0^\infty \theta_b(r,0,t) q_p \exp\left(-r^2 / r_p^2\right) r\, dr$$ ,

ein stationärer Temperaturanstieg der Probe ist: $\overline{\theta_{s0}} = 2\pi \int_0^\infty \theta_{s0}(r) q_p \exp\left(-r^2 / r_p^2\right) r\, dr$ ,

ein stationärer Temperaturanstieg des Substrats ist: $\overline{\theta_{b0}} = 2\pi \int_0^\infty \theta_{b0}(r,0) q_p \exp\left(-r^2 / r_p^2\right) r\, dr$ ,

eine Gaußsche Durchschnittskonstante eines Detektionslasers $q_p = 1 / \pi r_p^2$ ist, $\alpha_s$ eine Temperaturleitfähigkeit der Probe ist, $\alpha_b$ eine Temperaturleitfähigkeit des Substrats ist, und $g$ eine Kontaktwärmeleitfähigkeit zwischen der Probe und dem Substrat ist,
oder
die Probe eine suspendierte Probe ist, und der Gleichungssatz für instationäre Wärmeleitung der Probe im Abkühlungsschritt wie folgt lautet:

$$\left\{ \begin{array}{l} \dfrac{\partial^2 \theta_s(r,t)}{\partial r^2} + \dfrac{1}{r}\dfrac{\partial \theta_s(r,t)}{\partial r} = \dfrac{1}{\alpha_s}\dfrac{\partial \theta_s(r,t)}{\partial t} \\[3mm] \dfrac{\partial \theta_s(0)}{\partial r} = 0 \\[3mm] \theta_s(\infty,t) = 0 \\[3mm] \theta_s(r,0) = \theta_{s0}(r) \end{array} \right.$$

Wobei

ein Gaußscher Durchschnitt des Temperaturanstiegs der Probe nach der Zeit $t$ ist:

$$\overline{\theta_s}(t) = 2\pi \int_0^\infty \theta_s(r,t) q_p \exp\left(-r^2 / r_p^2\right) r\, dr$$ ,

ein stationärer Temperaturanstieg der Probe nach der Zeit $t$ ist: $\overline{\theta_{s0}} = 2\pi \int_0^\infty \theta_{s0}(r) q_p \exp\left(-r^2 / r_p^2\right) r\, dr$ ,

eine Gaußsche Durchschnittskonstante eines Detektionslasers $q_p = 1 / \pi r_p^2$ ist, und $\alpha_s$ eine Temperaturleit-

fähigkeit der Probe ist.

6. Verfahren nach Anspruch 3 oder 4, wobei der thermophysikalische Parameter mindestens einen der Parameter Wärmeleitfähigkeit, Temperaturleitfähigkeit und Kontaktwärmeleitfähigkeit umfasst; und Schritt (2) ferner umfasst:

(2-1) Aufstellen eines Gleichungssatzes für instationäre Wärmeleitung im Abkühlungsschritt des Schritts (1-2);
(2-2) Durchführen einer dimensionslosen Verarbeitung des Gleichungssatzes für instationäre Wärmeleitung; und
(2-3) Durchführen einer Multiparameteranpassung an dem dimensionslos verarbeiteten Gleichungssatz für instationäre Wärmeleitung auf Grundlage der Temperaturanstiegsdaten, um den thermophysikalischen Parameter der Probe zu erhalten,
wobei die Probe mit dem Substrat gekoppelt ist und der Gleichungssatz für instationäre Wärmeleitung der mit dem Substrat gekoppelten Probe im Abkühlungsschritt wie folgt aufgestellt wird:

$$
\begin{cases}
\dfrac{\partial^2 \theta_s(r,t)}{\partial r^2} + \dfrac{1}{r}\dfrac{\partial \theta_s(r,t)}{\partial r} - \dfrac{g\left(\theta_s(r,t) - \theta_s(r,0,t)\right)}{\lambda_s \delta} = \dfrac{1}{\alpha_s}\dfrac{\partial \theta_s(r,t)}{\partial t} \\[2ex]
\dfrac{\partial^2 \theta_b(r,z,t)}{\partial r^2} + \dfrac{1}{r}\dfrac{\partial \theta_b(r,z,t)}{\partial r} + \dfrac{\partial^2 \theta_b(r,z,t)}{\partial z^2} = \dfrac{1}{\alpha_b}\dfrac{\partial \theta_b(r,z,t)}{\partial t} \\[2ex]
\dfrac{\partial \theta_s(0)}{\partial r} = \dfrac{\partial \theta_b(0,z)}{\partial r} = 0 \\[2ex]
\theta_s(\infty,t) = \theta_b(\infty,z,t) = 0 \\[2ex]
\theta_b(r,\infty,t) = 0 \\[2ex]
-\lambda_b \dfrac{\partial \theta_b(r,0,t)}{\partial z} = g\left(\theta_s(r,t) - \theta_b(r,0,t)\right) \\[2ex]
\theta_s(r,0) = \theta_{s0}(r) \\[2ex]
\theta_b(r,z,0) = \theta_{b0}(r,z)
\end{cases}
$$

wobei

ein Gaußscher Durchschnitt des Temperaturanstiegs der Probe nach der Zeit $t$ ist:

$$\overline{\theta}_s(t) = 2\pi \int_0^\infty \theta_s(r,t) q_p \exp\left(-r^2/r_p^2\right) r\,dr,$$

ein Gaußscher Durchschnitt des Temperaturanstiegs an einer Oberfläche des Substrats nach der Zeit t ist:

$$\overline{\theta}_b(t) = 2\pi \int_0^\infty \theta_b(r,0,t) q_p \exp\left(-r^2/r_p^2\right) r\,dr,$$

ein stationärer Temperaturanstieg der Probe ist: $\overline{\theta}_{s0} = 2\pi \int_0^\infty \theta_{s0}(r) q_p \exp\left(-r^2/r_p^2\right) r\,dr,$

ein stationärer Temperaturanstieg des Substrats ist: $\overline{\theta}_{b0} = 2\pi \int_0^\infty \theta_{b0}(r,0) q_p \exp\left(-r^2/r_p^2\right) r\,dr,$

eine Gaußsche Durchschnittskonstante eines Detektionslasers $q_p = 1/\pi r_p^2$ ist, $\alpha_s$ eine Temperaturleitfähigkeit der Probe ist, $\alpha_b$ eine Temperaturleitfähigkeit des Substrats ist, und g eine Kontaktwärmeleitfähigkeit zwischen der Probe und dem Substrat ist.

7. Ein Laser-Flash-Raman-Spektroskopiesystem mit zwei Wellenlängen für die thermophysikalische Charakterisierung eines 2D-Nanomaterials, umfassend:

eine Probenkammer (100) mit einem Probenhalter, der zur Aufnahme eine Probe, die das 2D-Nanomaterial umfasst, konfiguriert ist;
eine Temperatursteuerungsplattform (120), die mit dem Probenhalter der Probenkammer (100) verbunden ist;

eine Heizvorrichtung (200), die einen gepulsten Heizlaser bildet, der so konfiguriert ist, dass er die Probe erhitzt, wobei ein erster optischer Ausgangspfad (*a*) der Heizvorrichtung (200) mit der Probenkammer (100) verbunden ist, und die Heizvorrichtung (200) umfasst:

einen ersten Laser (210), der so konfiguriert ist, dass er einen Heizlaser bildet; und
einen ersten elektro-optischen Modulator (220), der in einem optischen Pfad des Heizlasers angeordnet und so konfiguriert ist, dass er den Heizlaser in den gepulsten Heizlaser umwandelt;

eine Detektionsvorrichtung (300), die einen gepulsten Detektionslaser bildet, der so konfiguriert ist, dass er Raman-Streuung in der Probe mit einem Detektionsimpuls aus dem gepulsten Detektionslaser erzeugt, um Temperaturanstiegsdaten der Probe zu erfassen, wobei ein zweiter optischer Ausgangspfad (*b*) der Detektionsvorrichtung (300) mit der Probenkammer (100) verbunden ist und die Detektionsvorrichtung (300) umfasst:

einen zweiten Laser (310), der so konfiguriert ist, dass er einen Detektionslaser bildet; und
einen zweiten elektro-optischen Modulator (320), der in einem optischen Pfad des Detektionslasers angeordnet und so konfiguriert ist, dass er den Detektionslaser in den gepulsten Detektionslaser umwandelt;

einen digitalen Zweikanal-Signalgenerator (500), der jeweils elektrisch mit dem ersten elektro-optischen Modulator (220) und dem zweiten elektro-optischen Modulator (320) verbunden und so konfiguriert ist, dass er die Pulsperioden des gepulsten Heizlasers und des gepulsten Detektionslasers reguliert, um das Verfahren nach einem der Ansprüche 1 bis 6 auszuführen;
ein Raman-Spektrometer (600), das im überlappenden optischen Pfad des ersten optischen Ausgangspfads (*a*) und des zweiten optischen Ausgangspfads (*b*) angeordnet und mit der Probenkammer (100) verbunden ist und so konfiguriert ist, dass es Raman-Signale der Probe unter dem gepulsten Detektionslaser sammelt;
eine Temperaturanstiegs-Bestimmungseinheit (700), die mit dem Raman-Spektrometer (600) verbunden und konfiguriert ist, um die Temperaturanstiegsdaten der Probe basierend auf einem Verschiebungswert eines charakteristischen Peaks des 2D-Nanomaterials in den Raman-Signalen zu bestimmen; und
eine Vorrichtung zur Bestimmung thermophysikalischer Parameter (400), die so konfiguriert ist, dass sie einen thermophysikalischen Parameter der Probe auf der Grundlage der Temperaturanstiegsdaten bestimmt;
wobei der erste optische Ausgangspfad (*a*) sich teilweise mit dem zweiten optischen Ausgangspfad (*b*) überlappt und der gepulste Heizlaser eine Wellenlänge hat, die sich von einer Wellenlänge des gepulsten Detektionslasers unterscheidet, und der gepulste Heizlaser und der gepulste Detektionslaser die gleiche Pulsperiode haben.

8. System nach Anspruch 7, wobei die Wellenlänge des gepulsten Detektionslasers größer ist als die des gepulsten Heizlasers;

optional beträgt eine Intensität des gepulsten Detektionslasers, der auf eine obere Oberfläche der Probe strahlt, weniger als 3 mW;
optional umfasst das System eine Vakuumpumpe, und die Probenkammer (100) ist mit der Vakuumpumpe verbunden und weist einen Vakuumgrad von weniger als $10^{-3}$ Pa auf.

9. System nach Anspruch 7 oder 8, wobei die Probe mit einem Substrat unter einer unteren Oberfläche davon versehen ist, das Raman-Spektrometer (600) so konfiguriert ist, dass es Raman-Signale der Probe und des Substrats unter dem gepulsten Detektionslaser sammelt, und die Temperaturanstiegs-Bestimmungseinheit (700) so konfiguriert ist, dass sie erste Temperaturanstiegsdaten der Probe und zweite Temperaturanstiegsdaten des Substrats basierend auf dem Verschiebungswert des charakteristischen Peaks des 2D-Nanomaterials bzw. einem Verschiebungswert eines charakteristischen Peaks des Substrats in den Raman-Signalen bestimmt.

10. System nach Anspruch 9, wobei das 2D-Nanomaterial ein nicht-metallisches 2D-Nanofilmmaterial, vorzugsweise Graphen, Silylen oder Phosphoren, einschließt und
das Substrat Siliziumdioxid oder andere nicht-metallische Materialien mit charakteristischen Raman-Peaks umfasst.

11. System nach Anspruch 7 oder 8, wobei die Vorrichtung zur Bestimmung thermophysikalischer Parameter (400) umfasst:

eine Modellierungseinheit (410), die so konfiguriert ist, dass sie einen Gleichungssatz für instationäre Wärmeleitung der Probe in einem Abkühlungsschritt aufstellt;
eine Datenverarbeitungseinheit (420), die mit der Modellierungseinheit (410) verbunden und so konfiguriert ist, dass sie eine dimensionslose Verarbeitung des Gleichungssatzes für instationäre Wärmeleitung durchführt; und eine Einheit zur Bestimmung thermophysikalischer Parameter (430), die mit der Datenverarbeitungseinheit (420) verbunden und so konfiguriert ist, dass sie eine Multiparameteranpassung an dem dimensionslos verarbeiteten Gleichungssatz für instationäre Wärmeleitung durchführt und den thermophysikalischen Parameter der Probe bestimmt,

wobei der thermophysikalische Parameter optional mindestens einen von Wärmeleitfähigkeit, Temperaturleitfähigkeit und Kontaktwärmeleitfähigkeit umfasst,

wobei die Probe mit einem Substrat gekoppelt ist und die Modellierungseinheit (410) so konfiguriert ist, dass sie den Gleichungssatz für instationäre Wärmeleitung der mit dem Substrat gekoppelten Probe im Abkühlungsschritt wie folgt aufstellt:

$$\begin{cases} \dfrac{\partial^2 \theta_s(r,t)}{\partial r^2} + \dfrac{1}{r}\dfrac{\partial \theta_s(r,t)}{\partial r} - \dfrac{g\big(\theta_s(r,t) - \theta_s(r,0,t)\big)}{\lambda_s \delta} = \dfrac{1}{\alpha_s}\dfrac{\partial \theta_s(r,t)}{\partial t} \\[2ex] \dfrac{\partial^2 \theta_b(r,z,t)}{\partial r^2} + \dfrac{1}{r}\dfrac{\partial \theta_b(r,z,t)}{\partial r} + \dfrac{\partial^2 \theta_b(r,z,t)}{\partial z^2} = \dfrac{1}{\alpha_b}\dfrac{\partial \theta_b(r,z,t)}{\partial t} \\[2ex] \dfrac{\partial \theta_s(0)}{\partial r} = \dfrac{\partial \theta_b(0,z)}{\partial r} = 0 \\[2ex] \theta_s(\infty,t) = \theta_b(\infty,z,t) = 0 \\[2ex] \theta_b(r,\infty,t) = 0 \\[2ex] -\lambda_b \dfrac{\partial \theta_b(r,0,t)}{\partial z} = g\big(\theta_s(r,t) - \theta_b(r,0,t)\big) \\[2ex] \theta_s(r,0) = \theta_{s0}(r) \\[2ex] \theta_b(r,z,0) = \theta_{b0}(r,z) \end{cases}$$

wobei

ein Gaußscher Durchschnitt des Temperaturanstiegs der Probe nach der Zeit $t$ ist:
$$\overline{\theta}_s(t) = 2\pi \int_0^\infty \theta_s(r,t) q_p \exp\left(-r^2 / r_p^2\right) r\,dr,$$

ein Gaußscher Durchschnitt des Temperaturanstiegs an einer Oberfläche des Substrats nach der Zeit $t$ ist:
$$\overline{\theta}_b(t) = 2\pi \int_0^\infty \theta_b(r,0,t) q_p \exp\left(-r^2 / r_p^2\right) r\,dr,$$

ein stationärer Temperaturanstieg der Probe ist: $\quad \overline{\theta}_{s0} = 2\pi \int_0^\infty \theta_{s0}(r) q_p \exp\left(-r^2 / r_p^2\right) r\,dr,$

ein stationärer Temperaturanstieg des Substrats ist: $\quad \overline{\theta}_{b0} = 2\pi \int_0^\infty \theta_{b0}(r,0) q_p \exp\left(-r^2 / r_p^2\right) r\,dr,$

eine Gaußsche Durchschnittskonstante eines Detektionslasers $q_p = 1 / \pi r_p^2$ ist, $\alpha_s$ eine Temperaturleitfähigkeit der Probe ist, $\alpha_b$ eine Temperaturleitfähigkeit des Substrats ist, und g eine Kontaktwärmeleitfähigkeit zwischen der Probe und dem Substrat ist,

oder

die Probe eine suspendierte Probe ist, und die Modellierungseinheit (410) so konfiguriert ist, dass sie den Gleichungssatz für instationäre Wärmeleitung der Probe im Abkühlungsschritt wie folgt aufstellt:

$$\begin{cases} \dfrac{\partial^2 \theta_s(r,t)}{\partial r^2} + \dfrac{1}{r}\dfrac{\partial \theta_s(r,t)}{\partial r} = \dfrac{1}{\alpha_s}\dfrac{\partial \theta_s(r,t)}{\partial t} \\[2mm] \dfrac{\partial \theta_s(0)}{\partial r} = 0 \\[2mm] \theta_s(\infty,t) = 0 \\[2mm] \theta_s(r,0) = \theta_{s0}(r) \end{cases}$$

wobei

ein Gaußscher Durchschnitt des Temperaturanstiegs der Probe nach der Zeit $t$ ist:

$$\overline{\theta}_s(t) = 2\pi \int_0^\infty \theta_s(r,t)q_p \exp\left(-r^2/r_p^2\right)rdr \quad,$$

ein stationärer Temperaturanstieg der Probe nach der Zeit $t$ ist:

$$\overline{\theta}_{s0} = 2\pi \int_0^\infty \theta_{s0}(r)q_p \exp\left(-r^2/r_p^2\right)rdr \quad,$$

eine Gaußsche Durchschnittskonstante eines Detektionslasers $q_p = 1/\pi r_p^2$ ist, und $\alpha_s$ eine Temperaturleitfähigkeit der Probe ist.

12. System nach Anspruch 9 oder 10, wobei die Probe mit dem Substrat gekoppelt ist, die Modellierungseinheit (410) so konfiguriert ist, dass sie den Gleichungssatz für instationäre Wärmeleitung der mit dem Substrat gekoppelten Probe im Abkühlungsschritt wie folgt aufstellt:

$$\begin{cases} \dfrac{\partial^2 \theta_s(r,t)}{\partial r^2} + \dfrac{1}{r}\dfrac{\partial \theta_s(r,t)}{\partial r} - \dfrac{g\left(\theta_s(r,t)-\theta_s(r,0,t)\right)}{\lambda_s\delta} = \dfrac{1}{\alpha_s}\dfrac{\partial \theta_s(r,t)}{\partial t} \\[2mm] \dfrac{\partial^2 \theta_b(r,z,t)}{\partial r^2} + \dfrac{1}{r}\dfrac{\partial \theta_b(r,z,t)}{\partial r} + \dfrac{\partial^2 \theta_b(r,z,t)}{\partial z^2} = \dfrac{1}{\alpha_b}\dfrac{\partial \theta_b(r,z,t)}{\partial t} \\[2mm] \dfrac{\partial \theta_s(0)}{\partial r} = \dfrac{\partial \theta_b(0,z)}{\partial r} = 0 \\[2mm] \theta_s(\infty,t) = \theta_b(\infty,z,t) = 0 \\[2mm] \theta_b(r,\infty,t) = 0 \\[2mm] -\lambda_b\dfrac{\partial \theta_b(r,0,t)}{\partial z} = g\left(\theta_s(r,t)-\theta_b(r,0,t)\right) \\[2mm] \theta_s(r,0) = \theta_{s0}(r) \\[2mm] \theta_b(r,z,0) = \theta_{b0}(r,z) \end{cases}$$

Wobei

ein Gaußscher Durchschnitt des Temperaturanstiegs der Probe nach der Zeit t ist:

$$\overline{\theta}_s(t) = 2\pi \int_0^\infty \theta_s(r,t)q_p \exp\left(-r^2/r_p^2\right)rdr \quad,$$

ein Gaußscher Durchschnitt des Temperaturanstiegs an einer Oberfläche des Substrats nach der Zeit $t$ ist:

$$\overline{\theta}_b(t) = 2\pi \int_0^\infty \theta_b(r,0,t)q_p \exp\left(-r^2/r_p^2\right)rdr \quad,$$

ein stationärer Temperaturanstieg der Probe ist: $\quad \overline{\theta}_{s0} = 2\pi \int_0^\infty \theta_{s0}(r)q_p \exp\left(-r^2/r_p^2\right)rdr \quad,$

ein stationärer Temperaturanstieg des Substrats ist: $\quad \overline{\theta}_{b0} = 2\pi \int_0^\infty \theta_{b0}(r,0)q_p \exp\left(-r^2/r_p^2\right)rdr \quad,$

eine Gaußsche Durchschnittskonstante eines Detektionslasers $q_p = 1/\pi r_p^2$ ist, $\alpha_s$ eine Temperaturleitfähigkeit der Probe ist, $\alpha_b$ eine Temperaturleitfähigkeit des Substrats ist, und $g$ eine Kontaktwärmeleitfähigkeit zwischen der Probe und dem Substrat ist.

**Revendications**

1. Procédé de spectroscopie Raman par flash laser à double longueur d'onde pour la caractérisation thermophysique d'un nanomatériau 2D, comprenant :

(1) l'acquisition de données d'élévation de température d'un échantillon comprenant le nanomatériau 2D par chauffage de l'échantillon avec une impulsion de chauffage provenant d'un laser à impulsions de chauffage, puis par génération d'une diffusion Raman dans l'échantillon avec une impulsion de sondage provenant d'un laser à impulsions de détection, l'impulsion de chauffage présentant une longueur d'onde différente d'une longueur d'onde de l'impulsion de sondage, et l'impulsion de chauffage et l'impulsion de sondage présentant la même période d'impulsion ; et
(2) la détermination d'un paramètre thermophysique de l'échantillon sur la base des données d'élévation de température, dans lequel l'étape (1) comprend en outre :

(1-1) le chauffage, pendant une première durée d'impulsion $t_h$, de l'échantillon avec l'impulsion de chauffage provenant du laser à impulsions de chauffage pour permettre à l'échantillon d'atteindre une température constante $T_2$ à partir d'une température ambiante $T_1$ qui est régulée par une plate-forme de régulation de température connectée à un porte-échantillon d'une chambre d'échantillon pour l'échantillon ;
(1-2) puis le refroidissement de l'échantillon de la température constante $T_2$ à la température ambiante $T_1$ pendant un premier intervalle de temps $t_c$, et la détection d'un signal Raman de l'échantillon par génération d'une diffusion Raman dans l'échantillon avec l'impulsion de sondage provenant du laser à impulsions de détection, l'impulsion de sondage commençant avec un retard $t_d$ après la fin de la première durée d'impulsion $t_h$ et pendant une seconde durée d'impulsion $t_p$ dans le premier intervalle de temps $t_c$, pour acquérir un spectre Raman de l'échantillon à partir du signal Raman détecté ; et
(1-3) la détermination, sur la base d'une relation linéaire entre un décalage de pic de spectre Raman et une élévation de température, d'une élévation de température $T_3$ de l'échantillon pendant la seconde durée d'impulsion $t_p$ sur la base d'une valeur de décalage d'un pic caractéristique du nanomatériau 2D dans le spectre Raman acquis à l'étape (1-2).

2. Procédé selon la revendication 1, dans lequel le laser à impulsions de chauffage et le laser à impulsions de détection sont chacun formés en modulant un laser continu avec un modulateur électro-optique et un générateur de signal numérique ;

éventuellement, la longueur d'onde du laser à impulsions de détection est supérieure à celle du laser à impulsions de chauffage ;
éventuellement, une intensité du laser à impulsions de détection émettant sur une surface supérieure de l'échantillon est inférieure à 3 mW ;
éventuellement, l'étape (1) est réalisée dans un environnement sous vide avec un degré de vide inférieur à $10^{-3}$ Pa.

3. Procédé selon la revendication 1 ou 2, dans lequel un substrat est disposé au-dessous d'une surface inférieure de l'échantillon, et l'étape (1-2) comprend :

la détection des signaux Raman de l'échantillon et du substrat par génération d'une diffusion Raman dans l'échantillon et le substrat avec l'impulsion de sondage du laser à impulsions de détection pendant la seconde durée d'impulsion $t_p$ pour acquérir un spectre Raman de l'échantillon et du substrat à partir des signaux Raman détectés ; et
l'étape (1, 3) comprend :
la détermination de l'élévation de température $T_3$ de l'échantillon et d'une élévation de température $T_4$ du substrat pendant la seconde durée d'impulsion $t_p$ sur la base de la valeur de décalage du pic caractéristique du nanomatériau 2D et d'une valeur de décalage d'un pic caractéristique du substrat dans le spectre Raman, respectivement.

4. Procédé selon la revendication 3, dans lequel le nanomatériau 2D comprend un matériau de nanofilm non métallique 2D, de préférence du graphène, du silylène ou du phosphorène, et
le substrat comprend du dioxyde de silicium ou d'autres matériaux non métalliques présentant des pics caractéristiques Raman.

5. Procédé selon la revendication 1 ou 2, dans lequel le paramètre thermophysique comprend au moins l'une parmi la conductivité thermique, la diffusivité thermique et la conductivité thermique de contact ; et l'étape (2) comprend en outre :

(2-1) l'établissement d'un ensemble d'équations de conduction thermique instationnaire défini à l'étape de refroidissement de l'étape (1-2) ;
(2-2) la réalisation d'un traitement sans dimension sur l'ensemble d'équations de conduction thermique instationnaire ; et
(2-3) la réalisation d'un ajustement multiparamétrique sur l'ensemble d'équations de conduction thermique instationnaire traité sans dimension sur la base des données d'élévation de température, pour obtenir le paramètre thermophysique de l'échantillon, dans lequel l'échantillon est couplé à un substrat, et l'ensemble d'équations de conduction thermique instationnaire de l'échantillon couplé au substrat à l'étape de refroidissement est établi comme suit :

$$
\begin{cases}
\dfrac{\partial^2 \theta_s(r,t)}{\partial r^2} + \dfrac{1}{r}\dfrac{\partial \theta_s(r,t)}{\partial r} - \dfrac{g\big(\theta_s(r,t)-\theta_s(r,0,t)\big)}{\lambda_s \delta} = \dfrac{1}{\alpha_s}\dfrac{\partial \theta_s(r,t)}{\partial t} \\[2mm]
\dfrac{\partial^2 \theta_b(r,z,t)}{\partial r^2} + \dfrac{1}{r}\dfrac{\partial \theta_b(r,z,t)}{\partial r} + \dfrac{\partial^2 \theta_b(r,z,t)}{\partial z^2} = \dfrac{1}{\alpha_b}\dfrac{\partial \theta_b(r,z,t)}{\partial t} \\[2mm]
\dfrac{\partial \theta_s(0)}{\partial r} = \dfrac{\partial \theta_b(0,z)}{\partial r} = 0 \\[2mm]
\theta_s(\infty,t) = \theta_b(\infty,z,t) = 0 \\[2mm]
\theta_b(r,\infty,t) = 0 \\[2mm]
-\lambda_b \dfrac{\partial \theta_b(r,0,t)}{\partial z} = g\big(\theta_s(r,t)-\theta_b(r,0,t)\big) \\[2mm]
\theta_s(r,0) = \theta_{s0}(r) \\[2mm]
\theta_b(r,z,0) = \theta_{b0}(r,z)
\end{cases}
$$

dans lequel
une élévation de température moyenne gaussienne de l'échantillon en fonction du temps $t$ est

$$
\overline{\theta}_s(t) = 2\pi \int_0^\infty \theta_s(r,t)\, q_{p\,\exp}\big(-r^2/r_p^2\big) r\, dr \quad,
$$

une élévation de température moyenne gaussienne à la surface du substrat en fonction du temps t est

$$
\overline{\theta}_b(t) = 2\pi \int_0^\infty \theta_b(r,0,t)\, q_{p\,\exp}\big(-r^2/r_p^2\big) r\, dr \quad,
$$

une élévation de température à taux constant de l'échantillon est $\overline{\theta}_{s0} = 2\pi \int_0^\infty \theta_{s0}(r)\, q_{p\,\exp}\big(-r^2/r_p^2\big) r\, dr$ ,

une élévation de température à taux constant du substrat est $\overline{\theta}_{b0} = 2\pi \int_0^\infty \theta_{b0}(r,0)\, q_{p\,\exp}\big(-r^2/r_p^2\big) r\, dr$ ,

une constante moyenne gaussienne d'un laser de détection est $q_p = 1/\pi r_p^2$ , $\alpha_s$ est une diffusivité thermique de l'échantillon, $\alpha_b$ est une diffusivité thermique du substrat, et g est une conductivité thermique de contact entre l'échantillon et le substrat,
ou
l'échantillon est un échantillon en suspension, et l'ensemble d'équations de conduction thermique instationnaire de l'échantillon à l'étape de refroidissement est le suivant :

$$\begin{cases} \dfrac{\partial^2 \theta_s(r,t)}{\partial r^2} + \dfrac{1}{r}\dfrac{\partial \theta_s(r,t)}{\partial r} = \dfrac{1}{\alpha_s}\dfrac{\partial \theta_s(r,t)}{\partial t} \\[2mm] \dfrac{\partial \theta_s(0)}{\partial r} = 0 \\[2mm] \theta_s(\infty,t) = 0 \\[2mm] \theta_s(r,0) = \theta_{s0}(r) \end{cases}$$

dans lequel
une élévation de température moyenne gaussienne de l'échantillon en fonction du temps $t$ est

$$\overline{\theta}_s(t) = 2\pi \int_0^\infty \theta_s(r,t)\, q_p \exp\left(-r^2/r_p^2\right) r\, dr \;,$$

une élévation de température à taux constant de l'échantillon en fonction du temps $t$ est $\overline{\theta}_{s0} = 2\pi \int_0^\infty \theta_{s0}(r)\, q_p \exp\left(-r^2/r_p^2\right) r\, dr$ ,

une constante moyenne gaussienne d'un laser de détection est $q_p = 1/\pi r_p^2$ ,et $\alpha_s$ est une diffusivité thermique de l'échantillon.

6.  Procédé selon la revendication 3 ou 4, dans lequel le paramètre thermophysique comprend au moins l'une parmi la conductivité thermique, la diffusivité thermique et la conductivité thermique de contact ; et l'étape (2) comprend en outre :

    (2-1) l'établissement d'un ensemble d'équations de conduction thermique instationnaire défini à l'étape de refroidissement de l'étape (1-2) ;
    (2-2) la réalisation d'un traitement sans dimension sur l'ensemble d'équations de conduction thermique instationnaire ; et
    (2-3) la réalisation d'un ajustement multiparamétrique sur l'ensemble d'équations de conduction thermique instationnaire traité sans dimension sur la base des données d'élévation de température, pour obtenir le paramètre thermophysique de l'échantillon, dans lequel l'échantillon est couplé au substrat, et l'ensemble d'équations de conduction thermique instationnaire de l'échantillon couplé au substrat à l'étape de refroidissement est établi comme suit :

$$\begin{cases} \dfrac{\partial^2 \theta_s(r,t)}{\partial r^2} + \dfrac{1}{r}\dfrac{\partial \theta_s(r,t)}{\partial r} - \dfrac{g(\theta_s(r,t)-\theta_s(r,0,t))}{\lambda_s \delta} = \dfrac{1}{\alpha_s}\dfrac{\partial \theta_s(r,t)}{\partial t} \\[2mm] \dfrac{\partial^2 \theta_b(r,z,t)}{\partial r^2} + \dfrac{1}{r}\dfrac{\partial \theta_b(r,z,t)}{\partial r} + \dfrac{\partial^2 \theta_b(r,z,t)}{\partial z^2} = \dfrac{1}{\alpha_b}\dfrac{\partial \theta_b(r,z,t)}{\partial t} \\[2mm] \dfrac{\partial \theta_s(0)}{\partial r} = \dfrac{\partial \theta_b(0,z)}{\partial r} = 0 \\[2mm] \theta_s(\infty,t) = \theta_b(\infty,z,t) = 0 \\[2mm] \theta_b(r,\infty,t) = 0 \\[2mm] -\lambda_b \dfrac{\partial \theta_b(r,0,t)}{\partial z} = g(\theta_s(r,t) - \theta_b(r,0,t)) \\[2mm] \theta_s(r,0) = \theta_{s0}(r) \\[2mm] \theta_b(r,z,0) = \theta_{b0}(r,z) \end{cases}$$

dans lequel

une élévation de température moyenne gaussienne de l'échantillon en fonction du temps $t$ est

$$\overline{\theta}_s(t) = 2\pi \int_0^\infty \theta_s(r,t) q_{P_i \exp}\left(-r^2/r_p^2\right) r\, dr$$

une élévation de température moyenne gaussienne à la surface du substrat en fonction du temps $t$ est

$$\overline{\theta}_b(t) = 2\pi \int_0^\infty \theta_b(r,0,t) q_{P_i \exp}\left(-r^2/r_p^2\right) r\, dr$$

une élévation de température à taux constant de l'échantillon est $\overline{\theta}_{s0} = 2\pi \int_0^\infty \theta_{s0}(r) q_{P_i \exp}\left(-r^2/r_p^2\right) r\, dr$,

une élévation de température à taux constant du substrat est $\overline{\theta}_{b0} = 2\pi \int_0^\infty \theta_{b0}(r,0) q_{P_i \exp}\left(-r^2/r_p^2\right) r\, dr$,

une constante moyenne gaussienne d'un laser de détection est $q_P = 1/\pi r_p^2$, $\alpha_s$ est une diffusivité thermique de l'échantillon, $\alpha_b$ est une diffusivité thermique du substrat, et g est une conductivité thermique de contact entre l'échantillon et le substrat.

7. Système de spectroscopie Raman par flash laser à double longueur d'onde pour la caractérisation thermophysique d'un nanomatériau 2D, comprenant :

une chambre d'échantillon (100) avec un porte-échantillon, configurée pour recevoir un échantillon comprenant le nanomatériau 2D ;
une plate-forme de régulation de température (120) connectée au porte-échantillon de la chambre d'échantillon (100) ;
un dispositif de chauffage (200) formant un laser à impulsions de chauffage configuré pour chauffer l'échantillon, dans lequel un premier trajet optique de sortie ($\alpha$) du dispositif de chauffage (200) est connecté à la chambre d'échantillon (100), et le dispositif de chauffage (200) comprend :

un premier laser (210), configuré pour former un laser de chauffage ; et
un premier modulateur électro-optique (220), disposé dans un trajet optique du laser de détection et configuré pour convertir le laser de détection en laser à impulsions de chauffage;

un dispositif de détection (300) formant un laser à impulsions de détection configuré pour générer une diffusion Raman dans l'échantillon avec une impulsion de sondage provenant du laser à impulsions de détection afin de détecter des données d'élévation de température de l'échantillon, dans lequel un second trajet optique de sortie (b) du dispositif de détection (300) est connecté à la chambre d'échantillon (100), et le dispositif de détection (300) comprend :

un second laser (310), configuré pour former un laser de détection ; et
un second modulateur électro-optique (320), disposé dans un trajet optique du laser de détection et configuré pour convertir le laser de détection en laser à impulsions de détection ;

un générateur de signaux numériques à double canal (500), connecté électriquement au premier modulateur électro-optique (220) et au second modulateur électro-optique (320), respectivement, et
configuré pour réguler les périodes d'impulsion du laser à impulsions de chauffage et du laser à impulsions de détection pour mettre en oeuvre le procédé selon l'une quelconque des revendications 1 à 6 ;
un spectromètre Raman (600), disposé dans un trajet optique superposé par rapport au premier trajet optique de sortie ($\alpha$) et au second trajet optique de sortie (b) et connecté à la chambre d'échantillon (100), et configuré pour collecter des signaux Raman de l'échantillon sous le laser à impulsions de détection ;
une unité de détermination d'élévation de température (700), connectée au spectromètre Raman (600), et configurée pour déterminer les données d'élévation de température de l'échantillon sur la base d'une valeur de décalage d'un pic caractéristique du nanomatériau 2D dans les signaux Raman ; et
un dispositif de détermination de paramètre thermophysique (400), configuré pour déterminer un paramètre thermophysique de l'échantillon sur la base des données d'élévation de température ;
dans lequel le premier trajet optique de sortie ($\alpha$) chevauche partiellement le second trajet optique de sortie (b), et le laser à impulsions de chauffage présente une longueur d'onde différente d'une longueur d'onde du laser à impulsions de détection, et le laser à impulsions de chauffage et le laser à impulsions de détection présentent la même période d'impulsion.

8. Système selon la revendication 7, dans lequel la longueur d'onde du laser à impulsions de détection est supérieure à celle du laser à impulsions de chauffage ;

éventuellement, une intensité du laser à impulsions de détection émettant sur une surface supérieure de l'échantillon est inférieure à 3 mW ;
éventuellement, le système comprend une pompe à vide, et la chambre d'échantillon (100) est reliée à la pompe à vide et a un degré de vide inférieur à $10^{-3}$ Pa.

9. Système selon la revendication 7 ou 8, dans lequel l'échantillon est doté d'un substrat au-dessous d'une surface inférieure de celui-ci, le spectromètre Raman (600) est configuré pour collecter des signaux Raman de l'échantillon et du substrat sous le laser à impulsions de détection, et l'unité de détermination d'élévation de température (700) est configurée pour déterminer des premières données d'élévation de température de l'échantillon et des secondes données d'élévation de température du substrat sur la base de la valeur de décalage du pic caractéristique du nanomatériau 2D et d'une valeur de décalage d'un pic caractéristique du substrat dans les signaux Raman, respectivement.

10. Système selon la revendication 9, dans lequel le nanomatériau 2D inclut un matériau de nanofilm non métallique 2D, de préférence du graphène, du silylène ou du phosphorène, et
le substrat comprend du dioxyde de silicium ou d'autres matériaux non métalliques présentant des pics caractéristiques Raman.

11. Système selon la revendication 7 ou 8, dans lequel le dispositif de détermination de paramètre thermophysique (400) comprend :

une unité de modélisation (410), configurée pour établir un ensemble d'équations de conduction thermique instationnaire de l'échantillon au cours d'une étape de refroidissement ;
une unité de traitement de données (420), connectée à l'unité de modélisation (410) et configurée pour effectuer un traitement sans dimension sur l'ensemble d'équations de conduction thermique instationnaire ; et
une unité de détermination de paramètre thermophysique (430), connectée à l'unité de traitement de données (420) et configurée pour effectuer un ajustement multiparamétrique sur l'ensemble d'équations de conduction thermique instationnaire traité sans dimension et déterminer le paramètre thermophysique de l'échantillon,
éventuellement, le paramètre thermophysique comprend au moins l'une parmi la conductivité thermique, la diffusivité thermique et la conductivité thermique de contact,
dans lequel l'échantillon est couplé à un substrat, et l'unité de modélisation (410) est configurée pour établir l'ensemble d'équations de conduction thermique instationnaire de l'échantillon couplé au substrat à l'étape de refroidissement comme suit :

$$\begin{cases} \dfrac{\partial^2 \theta_s(r,t)}{\partial r^2} + \dfrac{1}{r}\dfrac{\partial \theta_s(r,t)}{\partial r} - \dfrac{g\left(\theta_s(r,t)-\theta_s(r,0,t)\right)}{\lambda_s \delta} = \dfrac{1}{\alpha_s}\dfrac{\partial \theta_s(r,t)}{\partial t} \\[2mm] \dfrac{\partial^2 \theta_b(r,z,t)}{\partial r^2} + \dfrac{1}{r}\dfrac{\partial \theta_b(r,z,t)}{\partial r} + \dfrac{\partial^2 \theta_b(r,z,t)}{\partial z^2} = \dfrac{1}{\alpha_b}\dfrac{\partial \theta_b(r,z,t)}{\partial t} \\[2mm] \dfrac{\partial \theta_s(0)}{\partial r} = \dfrac{\partial \theta_b(0,z)}{\partial r} = 0 \\[2mm] \theta_s(\infty,t) = \theta_b(\infty,z,t) = 0 \\[2mm] \theta_b(r,\infty,t) = 0 \\[2mm] -\lambda_b \dfrac{\partial \theta_b(r,0,t)}{\partial z} = g\left(\theta_s(r,t)-\theta_b(r,0,t)\right) \\[2mm] \theta_s(r,0) = \theta_{s0}(r) \\[2mm] \theta_b(r,z,0) = \theta_{b0}(r,z) \end{cases}$$

dans lequel
une élévation de température moyenne gaussienne de l'échantillon en fonction du temps $t$ est

$$\bar{\theta}_s(t) = 2\pi \int_0^\infty \theta_s(r,t) q_P \exp\left(-r^2/r_P^2\right) r\, dr \quad,$$

une élévation de température moyenne gaussienne à la surface du substrat en fonction du temps $t$ est

$$\bar{\theta}_b(t) = 2\pi \int_0^\infty \theta_b(r,0,t) q_P \exp\left(-r^2/r_P^2\right) r\, dr \quad,$$

$$\bar{\theta}_{s0} = 2\pi \int_0^\infty \theta_{s0}(r) q_P \exp$$

une élévation de température à taux constant de l'échantillon est

$$\left(-r^2/r_P^2\right) r\, dr \quad,$$

une élévation de température à taux constant du substrat est $\bar{\theta}_{b0} = 2\pi \int_0^\infty \theta_{b0}(r,0) q_P \exp\left(-r^2/r_P^2\right) r\, dr$ ,

une constante moyenne gaussienne d'un laser de détection est $q_P = 1/\pi r_P^2$ , $\alpha_s$ est une diffusivité thermique de l'échantillon, $\alpha_b$ est une diffusivité thermique du substrat, et g est une conductivité thermique de contact entre l'échantillon et le substrat,
ou
l'échantillon est un échantillon en suspension, et l'unité de modélisation (410) est configurée pour établir l'ensemble d'équations de conduction thermique instationnaire de l'échantillon à l'étape de refroidissement comme suit :

$$\begin{cases} \dfrac{\partial^2 \theta_s(r,t)}{\partial r^2} + \dfrac{1}{r}\dfrac{\partial \theta_s(r,t)}{\partial r} = \dfrac{1}{\alpha_s}\dfrac{\partial \theta_s(r,t)}{\partial t} \\[2mm] \dfrac{\partial \theta_s(0)}{\partial r} = 0 \\[2mm] \theta_s(\infty,t) = 0 \\[2mm] \theta_s(r,0) = \theta_{s0}(r) \end{cases}$$

dans lequel

une élévation de température moyenne gaussienne de l'échantillon en fonction du temps $t$ est

$$\overline{\theta}_s(t) = 2\pi \int_0^\infty \theta_s(r,t) q_p \exp\left(-r^2/r_p^2\right) r dr$$

une élévation de température à taux constant de l'échantillon en fonction du temps $t$ est

$$\overline{\theta}_{s0} = 2\pi \int_0^\infty \theta_{s0}(r) q_p \exp\left(-r^2/r_p^2\right) r dr$$

une constante moyenne gaussienne d'un laser de détection est $q_p = 1/\pi r_p^2$ , et $\alpha_s$ est une diffusivité thermique de l'échantillon.

12. Système selon la revendication 9 ou 10, dans lequel l'échantillon est couplé au substrat, l'unité de modélisation (410) est configurée pour établir l'ensemble d'équations de conduction thermique instationnaire de l'échantillon couplé au substrat à l'étape de refroidissement comme suit :

$$\begin{cases} \dfrac{\partial^2 \theta_s(r,t)}{\partial r^2} + \dfrac{1}{r}\dfrac{\partial \theta_s(r,t)}{\partial r} - \dfrac{g(\theta_s(r,t) - \theta_s(r,0,t))}{\lambda_s \delta} = \dfrac{1}{\alpha_s}\dfrac{\partial \theta_s(r,t)}{\partial t} \\[2mm] \dfrac{\partial^2 \theta_b(r,z,t)}{\partial r^2} + \dfrac{1}{r}\dfrac{\partial \theta_b(r,z,t)}{\partial r} + \dfrac{\partial^2 \theta_b(r,z,t)}{\partial z^2} = \dfrac{1}{\alpha_b}\dfrac{\partial \theta_b(r,z,t)}{\partial t} \\[2mm] \dfrac{\partial \theta_s(0)}{\partial r} = \dfrac{\partial \theta_b(0,z)}{\partial r} = 0 \\[2mm] \theta_s(\infty,t) = \theta_b(\infty,z,t) = 0 \\[2mm] \theta_b(r,\infty,t) = 0 \\[2mm] -\lambda_b \dfrac{\partial \theta_b(r,0,t)}{\partial z} = g(\theta_s(r,t) - \theta_b(r,0,t)) \\[2mm] \theta_s(r,0) = \theta_{s0}(r) \\[2mm] \theta_b(r,z,0) = \theta_{b0}(r,z) \end{cases}$$

dans lequel

une élévation de température moyenne gaussienne de l'échantillon en fonction du temps $t$ est

$$\overline{\theta}_s(t) = 2\pi \int_0^\infty \theta_s(r,t) q_p \exp\left(-r^2/r_p^2\right) r dr$$

une élévation de température moyenne gaussienne à la surface du substrat en fonction du temps test

$$\overline{\theta}_b(t) = 2\pi \int_0^\infty \theta_b(r,0,t) q_p \exp\left(-r^2/r_p^2\right) r dr$$

une élévation de température à taux constant de l'échantillon est $\overline{\theta}_{s0} = 2\pi \int_0^\infty \theta_{s0}(r) q_p \exp\left(-r^2/r_p^2\right) r dr$ ,

une élévation de température à taux constant du substrat est $\overline{\theta}_{b0} = 2\pi \int_0^\infty \theta_{b0}(r,0) q_p \exp\left(-r^2/r_p^2\right) r dr$ ,

une constante moyenne gaussienne d'un laser de détection est $q_p = 1/\pi r_p^2$ , $\alpha_s$ est une diffusivité thermique de l'échantillon, $\alpha_b$ est une diffusivité thermique du substrat, et $g$ est une conductivité thermique de contact entre l'échantillon et le substrat.

| acquiring temperature rise data of a sample comprising the 2D nanomaterial by a heating pulsed laser and a detecting pulsed laser with different wavelengths and same pulse period | S100 |

$\downarrow$

| determining a thermophysical parameter of the sample based on the temperature rise data | S200 |

Fig. 1

| heating the sample with the heating pulsed laser to enable the sample to reach a steady temperature from an ambient temperature during a first pulse duration | S110 |

$\downarrow$

| cooling the sample from the steady temperature to the ambient temperature during a first time interval, and detecting the sample by the detecting pulsed laser from a time deviation in the first time interval and during a second pulse duration, to acquire a Raman spectrum of the sample | S120 |

$\downarrow$

| determining a temperature rise of the sample during the second pulse duration based on a shift value of a characteristic peak of the 2D nanomaterial in the Raman spectrum | S130 |

Fig. 2

establishing an unsteady heat conduction equation set in a cooling stage

S210

performing a dimensionless processing on the unsteady heat conduction equation set

S220

performing a multi-parameter fitting on the dimensionless processed unsteady heat conduction equation set based on the temperature rise data

S230

Fig. 3

200

a

300

b

400

A

B

100

Fig. 4

Fig. 5

Fig. 6

Fig. 7

Fig. 8

Fig. 9

Fig. 10

Fig. 11

Fig. 12

Fig. 13

Fig. 14

Fig. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017219489 A1

- US 2013266038 A1

**Non-patent literature cited in the description**

- **XIE H et al.** *Applied Physics Letters,* 2013, vol. 102 (11), 111911
- **JANG W et al.** *Applied Physics Letters,* 2013, vol. 103 (13), 133102

- **LI Q Y et al.** *International Journal of Heat and Mass Transfer,* 2016, vol. 95, 956-963